# EUROPEAN PATENT SPECIFICATION

(11) **EP 1 571 022 B1**
(45) Date of publication and mention of the grant of the patent: **26.09.2007**
(21) Application number: 05003524.5
(22) Date of filing: 18.02.2005
(51) Int. Cl.: B60H 1/32, B60H 1/00

(54) **Vehicle control system including an air conditioning system**
Kraftfahrzeugsteuerungssystem mit Klimaanlage
Système de contrôle de véhicule comprenant une climatisation

(30) Priority: 03.03.2004 JP 2004059206; 03.03.2004 JP 2004059215; 03.03.2004 JP 2004059225
(43) Date of publication of application: 07.09.2005
(73) Proprietor: Mazda Motor Corporation, Aki-gun, Hiroshima 735-8670 (JP)
(72) Inventor: Kajimoto, Shinshi c/o Mazda Motor Corporation, Aki-gun, Hiroshima 735-8670 (JP); Kohama, Shoichi c/o Mazda Motor Corporation, Aki-gun, Hiroshima 735-8670 (JP); Miyagawa, Kazuhiro c/o Mazda Motor Corporation, Aki-gun, Hiroshima 735-8670 (JP); Takikawa, Yukihito c/o Mazda Motor Corporation, Aki-gun, Hiroshima 735-8670 (JP)
(74) Representative: Thoma, Michael

(56) References cited:
- EP-A- 0 995 621
- EP-A- 1 213 166
- US-A1- 2003 233 835

## Description

### BACKGROUND OF THE INVENTION

### (a) Field of the Invention

This application relates to a vehicle control system including an air conditioning system and an automatic engine stop control system for automatically stopping a vehicle engine, as laid down in the preamble portion of claim 1.

### (b) Description of Related Art

In order to improve fuel efficiency and reduce exhaust gas, there are conventionally known techniques for automatically stopping a vehicle engine (stopping its idling) when the vehicle is making a stop such as to wait at stoplights. Meanwhile, vehicles are generally equipped with a water pump and a compressor as engine accessories driven by the engine. These accessories supply heat transfer medium necessary for air conditioning to a heat exchanger, which exchanges heat with the heat transfer medium to heat or cool supply air to the cabin. For such vehicles, once the engine is stopped during air conditioning, the operations of the accessories are also stopped, leading to insufficient heating or cooling of the supply air. This results in deteriorated air conditioning performance. Therefore, it is conceivable to inhibit an automatic engine stop as long as the air conditioning system is in operation. The air conditioning system is, however, often in operation and therefore there will be little chance to automatically stop the engine. This hardly contributes to fuel efficiency improvement and exhaust gas reduction.

To cope with this, for example as disclosed in Japanese Unexamined Patent Publication No. 2000-179374, a technique is proposed that, when a cooling request from a passenger and an automatic engine stop concurrently occur, can respond to the cooling request while providing the effects of fuel efficiency improvement and exhaust gas reduction, as by stopping the operation of the compressor and inhibiting the restart of the compressor until after the passage of a predetermined period or inhibiting the restart of the compressor until the difference between the desired cabin temperature set by the passenger and the actual cabin temperature exceeds a predetermined threshold value.

According to the technique as disclosed in the above publication, though the frequency with which the engine automatically stops is increased, the operation of the air conditioning system is also stopped concurrently. Therefore, when the difference between the desired cabin temperature and the actual cabin temperature is substantially large, as for example when little time has passed from engine start, it becomes difficult to allow the actual cabin temperature to quickly approach the desired temperature, which gives uncomfortable feeling to passengers. Furthermore, when the compressor is adapted to restart at the time when the difference between the desired and actual cabin temperatures exceeds the predetermined threshold value, how to determine the threshold value is difficult. For example, if the threshold value is too small, the compressor immediately restarts, which provides neither fuel efficiency improvement effect nor exhaust gas reduction effect. On the other hand, if the threshold value is too large, the compressor is hard to restart, which gives uncomfortable feeling to the passengers.

A vehicle control system underlying the preamble portion of claim 1 is known from US 2003/0233835 A1 suggesting to detect an inner temperature of a heat transfer medium duct and to adapt the engine stopping period to the measured inner temperature.

### SUMMARY OF THE INVENTION

The present invention has been made in view of the foregoing points and therefore its object is, in automatically stopping an engine during a stop of a vehicle equipped with an air conditioning system as described above, to properly set engine stop periods to maximize the frequency with which the engine automatically stops during a vehicle stop while minimizing uncomfortable feeling of passengers by maintaining the air conditioning performance at high level.

To attain the above object, according to the present invention, a vehicle control system having the features of claim 1 is provided. Preferred embodiments are laid down in the dependent claims.

More specifically, the present invention is directed to a vehicle control system including an air conditioning system and an automatic engine stop control system for automatically stopping a vehicle engine.

The vehicle control system further comprises: an accessory which is driven by the vehicle engine; a vehicle stop detecting device for detecting a stop of the vehicle; and an air conditioning operation detecting device for detecting the operation of the air conditioning system, wherein the air conditioning system comprises: a heat exchanger for heating or cooling supply air to a cabin of the vehicle by heat exchange with heat transfer medium supplied from the accessory; and a supply air temperature controller for controlling the temperature of the supply air to the cabin, wherein the vehicle control system further comprises an air conditioning capability detecting device for detecting a value relating to the capability of the heat transfer medium to heat or cool the supply air, and wherein the automatic engine stop control system controls the engine to automatically stop for a predetermined period when the vehicle is determined to be stopping based on a detection result of the vehicle stop detecting device, the air conditioning system is determined to be in operation based on a detection result of the air conditioning operation detecting device and the detected value of the air conditioning capability detecting device meets a specified condition.

With this structure, the air conditioning capability detecting device detects a value relating to the capability of the heat transfer medium to heat or cool the supply air (such as engine cooling water temperature or refrigerant discharge pressure of a compressor) and the automatic engine stop control system automatically stops the engine for a predetermined period when the value detected meets a specified condition. Therefore, an automatic engine stop can be implemented while the air conditioning system is in operation, and the air conditioning performance can be held at rather high level even if an automatic engine stop is carried out. Specifically, the specified condition is set at a condition that allows the capability of the heat transfer medium to heat or cool the supply air to be kept at high level even if the engine is stopped for a predetermined period, such as a condition that the engine cooling water temperature is equal to or higher than a specified temperature or a condition that the refrigerant discharge pressure is equal to or higher than a specified pressure. Thus, deterioration in air conditioning performance due to an automatic engine stop can be suppressed to keep the air conditioning performance at high level, which avoids giving uncomfortable feeling to passengers. Furthermore, since the detected value generally comes to meet the specified condition when a certain period of time has passed after engine start, the frequency with which an automatic engine stop occurs can be increased.

The vehicle control system further comprises: an outside air temperature detecting device for detecting the outside air temperature around the vehicle; preferably a cabin temperature detecting device for detecting the temperature in the cabin; and a desired cabin temperature setting section, constituting part of the air conditioning system, for setting a desired temperature in the cabin, wherein the automatic engine stop control system sets the predetermined period at a fixed or longer period when the outside air temperature detected by the outside air temperature detecting device is within a specified range, and preferably sets the predetermined period at a period set based on the temperature difference between the desired cabin temperature set by the desired cabin temperature setting section and the cabin temperature detected by the cabin temperature detecting device when the outside air temperature is out of the specified range.

Thus, since the difference between the desired and actual cabin temperatures is generally large when the outside air temperature is out of the specified range, the predetermined period that is an engine stop period can be set at a period for which the air conditioning performance can be considered as much as possible, which avoids giving uncomfortable feeling to the passengers. On the other hand, when the outside air temperature is within the specified range, the engine can certainly be stopped for the fixed period, which ensures the provision of fuel efficiency improvement and exhaust gas reduction.

Furthermore, when the outside air temperature detected by the outside air temperature detecting device is within the specified range, the predetermined period is preferably a period obtained by adding to the fixed period the period set based on the temperature difference between the desired cabin temperature set by the desired cabin temperature setting section and the cabin temperature detected by the cabin temperature detecting device.

Thus, when the outside air temperature is within the specified range, the engine stop period can be extended as long as possible to the extent that the air conditioning performance does not deteriorate, which further enhances the effects of fuel efficiency improvement and exhaust gas reduction.

Furthermore, the automatic engine stop control system preferably limits the predetermined period so as not to exceed a maximum value set according to the outside air temperature detected by the outside air temperature detecting device.

The reason for this configuration is that a sensor serving as a cabin temperature detecting device for detecting the cabin temperature is generally provided only one per instrument panel and the single sensor is less likely to accurately detect the cabin temperature. Therefore, if the predetermined period is limited so as not to exceed the maximum value set according to the outside air temperature as in the present invention, deterioration in the air conditioning performance can certainly be suppressed even with a single sensor.

Preferably, in the above vehicle control system, the accessory is a water pump, the heat transfer medium is engine cooling water supplied from the water pump to the heat exchanger, the air conditioning capability detecting device is configured to detect the temperature of the engine cooling water as the value relating to the capability of the heat transfer medium to heat or cool the supply air, the specified condition is that the engine cooling water temperature detected by the air conditioning capability detecting device is equal to or higher than a specified temperature, and the automatic engine stop control system controls the engine to automatically stop if the specified condition is satisfied.

With this configuration, when the engine cooling water temperature is equal to or higher than the specified temperature, the capability of the engine cooling water to heat the supply air can be kept at rather high level even if the engine is stopped for the predetermined period. Furthermore, if the engine cooling water temperature is equal to or higher than the specified temperature, it can normally be assumed that the refrigerant discharge pressure of the compressor reaches or exceeds the specified pressure. Therefore, in such a case, the capability of the refrigerant to cool the supply air can be kept at rather high level even if the engine is stopped for the predetermined period.

Alternatively, in the vehicle control system, the accessory may be a compressor, the heat transfer medium may be refrigerant supplied from the compressor to the heat exchanger, the air conditioning capability detecting device may be configured to detect the refrigerant discharge pressure of the compressor as the value relating to the capability of the heat transfer medium to heat or cool the supply air, the specified condition may be that the refrigerant discharge pressure detected by the air conditioning capability detecting device is equal to or higher than a specified pressure, the automatic engine stop control system may control the engine to automatically stop if the specified condition is satisfied.

With this configuration, when the refrigerant discharge pressure is equal to or higher than the specified pressure, the capability of the refrigerant to cool the supply air can be kept at rather high level even if the engine is stopped for the predetermined period.

Preferably, the vehicle control system further comprises: a plurality of detecting devices for air conditioning in the air conditioning system; and a failure detecting device for detecting failure in the plurality of detecting devices, wherein the automatic engine stop control system is configured, when the failure detecting device detects failure in any of the plurality of detecting devices, to permit or inhibit an automatic engine stop of the automatic engine stop control system depending on in which of the detecting devices failure has been detected.

With this configuration, when the detecting device in which failure has been detected is a detecting device having much influence on air conditioning, the air conditioning is given priority by inhibiting an automatic engine stop, which avoids giving uncomfortable feeling to the passengers. On the other hand, when the detecting device in which failure has been detected is a detecting device having less influence on air conditioning, an automatic engine stop is permitted. Since, in this case, no failure occurs in detecting devices having much influence on air conditioning, it can be determined that even if an automatic engine stop is carried out, the air conditioning performance is not deteriorated so much. Therefore, deterioration in the air conditioning performance can certainly be suppressed.

It is preferable that the plurality of detecting devices include: a water temperature detecting device for detecting the temperature of the engine cooling water serving as the heat transfer medium; an outside air temperature detecting device for detecting the outside air temperature around the vehicle; and a cabin temperature detecting device for detecting the temperature in the cabin, and wherein when the detecting device in which failure has been detected by the failure detecting device is either one of the water temperature detecting device, the outside air temperature detecting device and the cabin temperature detecting device, the automatic engine stop control system inhibits an automatic engine stop of the automatic engine stop control system until the passage of a first predetermined period from the time when an ignition switch is turned ON, and permits an automatic engine stop of the automatic engine stop control system after the passage of the first predetermined period.

With this configuration, when the detecting device in which failure has been detected by the failure detecting device is either one of the water temperature detecting device, the outside air temperature detecting device and the cabin temperature detecting device, i.e., detecting devices having much influence on air conditioning, an automatic engine stop is carried out after the passage of the first predetermined period from the time when the ignition switch is turned ON. Therefore, even if the detecting device in which failure has been detected is a detecting device having much influence on air conditioning, the frequency with which an automatic engine stop occurs can be increased while deterioration in the air conditioning performance can be suppressed. In other words, if the first predetermined period is set at a period in which the engine cooling water temperature or the refrigerant discharge pressure of the compressor can become relatively high, the air conditioning performance can be kept at rather high level even if an automatic engine stop is carried out after the passage of the first predetermined period.

Furthermore, preferably, the vehicle control system further comprises a set temperature detecting device for detecting the temperature set by a passenger's setting, wherein when the set temperature detecting device detects a change in the set temperature after the passage of the first predetermined period from the time when the ignition switch is turned ON, the automatic engine stop control system inhibits an automatic engine stop of the automatic engine stop control system.

It can be considered that changing the set temperature means that the passenger is feeling uncomfortable. Therefore, if in such a case an automatic engine stop is inhibited, this avoids giving more uncomfortable feeling to the passenger.

Furthermore, it is preferable that when the set temperature detecting device detects no further change in the set temperature after the passage of a second predetermined period from the time when the set temperature detecting device detects the change in the set temperature, the automatic engine stop control system permits an automatic engine stop of the automatic engine stop control system.

In such a case, it can be determined that the passenger is not feeling uncomfortable, and an automatic engine stop can be carried out. Therefore, a suitable selection between inhibition and permission of an automatic engine stop can be made according to the passenger's operation.

Furthermore, it is preferable that when the detecting device in which failure has been detected by the failure detecting device is the water temperature detecting device and the outside air temperature detected by the outside air temperature detecting device is equal to or higher than a reference temperature, the automatic engine stop control system makes the first predetermined period shorter than that when the outside air temperature is lower than the reference temperature.

The reason for this is that when the outside air temperature is equal to or higher than the reference temperature (e.g., 15°C), the engine cooling water temperature and the refrigerant discharge pressure rise in a shorter period than when it is lower than the reference temperature. Therefore, if the first predetermined period at outside air temperatures equal to or higher than the reference temperature is made shorter than that at outside air temperatures lower than the reference temperature, this further increases the frequency with which an automatic engine stop occurs while suppressing deterioration in the air conditioning performance.

Preferably, the vehicle control system further comprises: a blow-off port selecting mechanism, constituting part of the air conditioning system, for selecting among blow-off ports for the supply air to the cabin; a selected blow-off port mode detecting device for detecting the mode of blow-off port presently selected by the blow-off port selecting mechanism; and a humidity detecting device for detecting the humidity in the cabin, wherein when the detecting device in which failure has been detected by the failure detecting device is the selected blow-off port mode detecting device, the automatic engine stop control system inhibits an automatic engine stop of the automatic engine stop control system if the humidity detected by the humidity detecting device is larger than a specified value, and permits an automatic engine stop of the automatic engine stop control system if the humidity is equal to or smaller than the specified value.

With this configuration, when the humidity in the cabin is larger than the specified value, air conditioning can be given priority to prevent windshield fogging by inhibiting an automatic engine stop even if failure occurs in the selected blow-off port mode detecting device. On the other hand, when the humidity in the cabin is equal to or smaller than the specified value, the windshield is less likely to fog. Therefore, the frequency with which an automatic engine stop occurs can be increased by permitting an automatic engine stop.

Furthermore, it is preferable that when the detecting device in which failure has been detected by the failure detecting device is a light intensity detecting device for detecting the intensity of sunlight or a set temperature detecting device for detecting the temperature set by a passenger's setting, the automatic engine stop control system permits an automatic engine stop of the automatic engine stop control system.

Since the light intensity detecting device and the set temperature detecting device do not have so much influence on air conditioning, the frequency with which an automatic engine stop occurs can be increased by permitting an automatic engine stop. In the event of failure in the set temperature detecting device, the set temperature is set at about 25°C, so that it can normally be avoided to give uncomfortable feeling to the passenger.

Preferably, in the vehicle control system, when the vehicle is determined to be stopping based on a detection result of the vehicle stop detecting device and the air conditioning system is determined to be in operation based on a detection result of the air conditioning operation detecting device, the automatic engine stop control system controls the engine to automatically stop for a first predetermined period if the detected value of the air conditioning capability detecting device meets a first specified condition and to automatically stop for a second predetermined period shorter than the first predetermined period if the detected value of the air conditioning capability detecting device meets a second specified condition that makes the capability of the heat transfer medium to heat or cool the supply air lower than when meeting the first specified condition.

With this configuration, when the value detected by the air conditioning capability detecting device meets the first specified condition (a condition that allow the capability of the heat transfer medium to heat or cool the supply air to be kept at rather high level even if the engine is stopped for the first predetermined period, such as a condition that the engine cooling water temperature is equal to or higher than the first specified temperature or a condition that the refrigerant discharge pressure is equal to or higher than the first specified pressure), the automatic engine stop control system automatically stops the engine for a first predetermined period. Therefore, an automatic engine stop can be implemented while the air conditioning system is in operation, and the air conditioning performance can be held at high level even if an automatic engine stop is carried out. This avoids giving uncomfortable feeling to passengers. Furthermore, since the detected value generally comes to meet the first specified condition when a certain period of time has passed after engine start, the frequency with which an automatic engine stop occurs can be increased. Furthermore, when the detected value meets the second specified condition that makes the capability of the heat transfer medium to heat or cool the supply air lower than when meeting the first specified condition (i.e., when the engine cooling water temperature is equal to or higher than a second specified temperature (a temperature lower than the first specified temperature) but lower than the first specified temperature, or when the refrigerant discharge pressure is equal to or higher than a second specified pressure (a pressure lower than the first specified pressure) but lower than the first specified pressure), an automatic engine stop is carried out for a second predetermined period shorter than the first predetermined period. Therefore, the frequency with which an automatic engine stop occurs can be further increased while deterioration in air conditioning performance due to an automatic engine stop can be suppressed.

The vehicle control system preferably further comprises: a cabin temperature detecting device for detecting the temperature in the cabin; and a desired cabin temperature setting section, constituting part of the air conditioning system, for setting a desired temperature in the cabin, wherein the automatic engine stop control system sets the first and second predetermined periods based on the temperature difference between the desired cabin temperature set by the desired cabin temperature setting section and the cabin temperature detected by the cabin temperature detecting device and increases the difference between the first and second predetermined periods with increase in the temperature difference.

With this configuration, as the temperature difference between the desired cabin temperature and the actual cabin temperature is increased, the first and second predetermined periods are set shorter and the second predetermined period is made shorter than the first predetermined period to increase the difference between the first and second predetermined periods. Thus, the engine stop period can be set at a period for which the air conditioning performance can be considered as much as possible, which avoids giving uncomfortable feeling to the passengers.

The vehicle control system preferably further comprises an outside air temperature detecting device for detecting the outside air temperature around the vehicle, wherein when the vehicle is determined to be stopping based on a detection result of the vehicle stop detecting device, the air conditioning system is determined to be in operation based on a detection result of the air conditioning operation detecting device and the detected value of the air conditioning capability detecting device meets the first specified condition, the automatic engine stop control system controls the engine to automatically stop for the first predetermined period on condition that the outside air temperature detected by the outside air temperature detecting device is within a first specified range, and wherein when the vehicle is determined to be stopping based on a detection result of the vehicle stop detecting device, the air conditioning system is determined to be in operation based on a detection result of the air conditioning operation detecting device and the detected value of the air conditioning capability detecting device meets the second specified condition, the automatic engine stop control system controls the engine to automatically stop for the second predetermined period on condition that the outside air temperature detected by the outside air temperature detecting device is within a second specified range included in and narrower than the first specified range.

With this configuration, where the outside air temperature is within the first specified range, the difference between the desired and actual cabin temperatures is generally relatively small. Therefore, when in such a case the value detected by the air conditioning capability detecting device meets the first specified condition, the air conditioning performance can certainly be kept at high level even if the engine is automatically stopped for the first predetermined period. Furthermore, when the value detected meets the second specified condition, the engine is automatically stopped for the second predetermined period if the outside air temperature is within the second specified range narrower than the second predetermined period, i.e., when it can be considered that the difference between the desired and actual cabin temperatures is smaller. This certainly suppresses deterioration in the air conditioning performance.

The automatic engine stop control system preferably limits the first and second predetermined periods so as not to exceed maximum values, respectively, set according to the outside air temperature detected by the outside air temperature detecting device, and makes the maximum value of the second predetermined period shorter than the maximum value of the first predetermined period.

Thus, even if a sensor serving as a cabin temperature detecting device for detecting the cabin temperature is provided only one per instrument panel, deterioration in the air conditioning performance can certainly be suppressed.

Preferably, in the vehicle control system, the accessory is a water pump, the heat transfer medium is engine cooling water supplied from the water pump to the heat exchanger, the air conditioning capability detecting device is configured to detect the temperature of the engine cooling water as the value relating to the capability of the heat transfer medium to heat or cool the supply air, the first specified condition is that the engine cooling water temperature detected by the air conditioning capability detecting device is equal to or higher than a first specified temperature, the second specified condition is that the engine cooling water temperature is lower than the first specified temperature and equal to or higher than a second specified temperature lower than the first specified temperature, and the automatic engine stop control system controls the engine to automatically stop for the first predetermined period if the first specified condition is satisfied and automatically stop for the second predetermined period if the second specified condition is satisfied.

With this configuration, when the engine cooling water temperature is equal to or higher than the first specified temperature (or second specified temperature), the capability of the engine cooling water to heat the supply air can be kept at rather high level even if the engine is stopped for the first predetermined period (or second predetermined period). Furthermore, if the engine cooling water temperature is equal to or higher than the first specified temperature (or second specified temperature), it can normally be assumed that the refrigerant discharge pressure of the compressor reaches or exceeds the first specified pressure (or the second specified pressure lower than the first specified pressure). Therefore, in such a case, the capability of the refrigerant to cool the supply air can be kept at rather high level even if the engine is stopped for the first predetermined period (or second predetermined period).

Alternatively, in the vehicle control system, the accessory may be a compressor, the heat transfer medium may be refrigerant supplied from the compressor to the heat exchanger, the air conditioning capability detecting device may be configured to detect the refrigerant discharge pressure of the compressor as the value relating to the capability of the heat transfer medium to heat or cool the supply air, the first specified condition may be that the refrigerant discharge pressure detected by the air conditioning capability detecting device is equal to or higher than a first specified pressure, the second specified condition may be that the refrigerant discharge pressure is lower than the first specified pressure and equal to or higher than a second specified pressure lower than the first specified pressure, and the automatic engine stop control system may control the engine to automatically stop for the first predetermined period if the first specified condition is satisfied and automatically stop for the second predetermined period if the second specified condition is satisfied.

With this configuration, when the refrigerant discharge pressure is equal to or higher than the first specified pressure (or the second specified pressure), the capability of the refrigerant to cool the supply air can be kept at rather high level even if the engine is stopped for the first predetermined period (or the second predetermined period).

### BRIEF DESCRIPTION OF THE DRAWINGS

Figure **1** is a block diagram showing the structure of a vehicle control system according to an embodiment of the present invention.
Figure **2** is a graph showing an example of relation between outside air temperature and predetermined period (automatic stop period) when an air conditioning switch and a blower switch are both ON in a first embodiment of the present invention.
Figure **3** is a graph showing an example of relation between outside air temperature and predetermined period (automatic stop period) when the air conditioning switch is OFF and the blower switch is ON in the first embodiment.
Figure **4** is a graph showing an example of relation between the difference between desired and actual cabin temperatures and variable period in the first embodiment.
Figure **5** is a flow chart showing a first half of a control action of a vehicle control unit in the first embodiment.
Figure **6** is a flow chart showing a second half of the control action of the vehicle control unit in the first embodiment.
Figure **7** is a graph showing an example of relation between outside air temperature and first or second predetermined period (automatic stop period) when an air conditioning switch and a blower switch are both ON in a second embodiment of the present invention.
Figure **8** is a graph showing an example of relation between outside air temperature and first or second predetermined period (automatic stop period) when the air conditioning switch is OFF and the blower switch is ON in the second embodiment.
Figure **9** is a graph showing an example of relation between the difference between desired and actual cabin temperatures and first and second predetermined periods in the second embodiment.
Figure **10** is a flow chart showing a part of a control action of a vehicle control unit in the second embodiment.
Figure **11** is a flow chart showing another part of the control action of the vehicle control unit in the second embodiment.
Figure **12** is a flow chart showing still another part of the control action of the vehicle control unit in the second embodiment.
Figure **13** is a graph showing an example of relation between outside air temperature and predetermined period (automatic stop period) when an air conditioning switch and a blower switch are both ON in a third embodiment of the present invention.
Figure **14** is a graph showing an example of relation between outside air temperature and predetermined period (automatic stop period) when the air conditioning switch is OFF and the blower switch is ON in the third embodiment.
Figure **15** is a flow chart showing a part of a control action of a vehicle control unit in the third embodiment.
Figure **16** is a flow chart showing another part of the control action of the vehicle control unit in the third embodiment.
Figure **17** is a flow chart showing still another part of the control action of the vehicle control unit in the third embodiment.
Figure **18** is a flow chart showing still another part of the control action of the vehicle control unit in the third embodiment.

### DESCRIPTION OF THE PREFERRED EMBODIMENTS

Hereinafter, embodiments of the present invention will be described with reference to the drawings.

### Embodiment 1

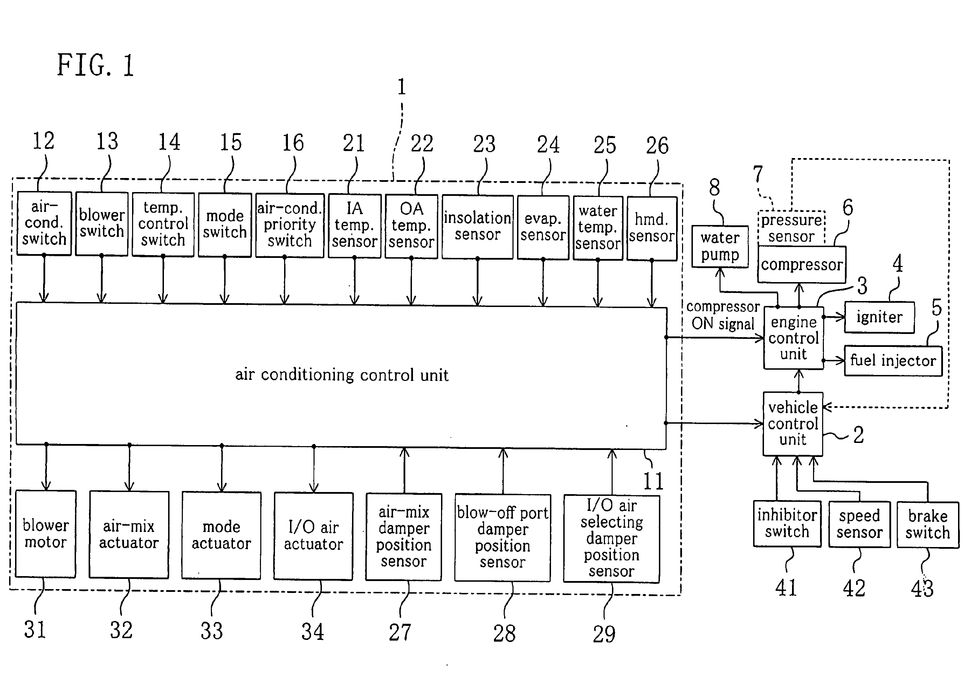

Figure **1** shows a vehicle control system for a vehicle according to an embodiment of the present invention. This vehicle control system includes an air conditioning system **1,** a vehicle control unit **2** and an engine control unit **3.** The vehicle control unit **2** serves as an automatic engine stop control system for automatically stopping an engine of the vehicle when the vehicle is making a stop (in this embodiment, not only the vehicle is making a stop but also the selector lever of its automatic transmission is in neutral range or parking range and its brake pedal is stepped on) and the air conditioning system **1** is in a specified condition. The engine control unit **3** controls an igniter **4,** a fuel injector **5** and so on in the engine.

The air conditioning system **1** includes a blower for supplying air into a cabin of the vehicle, a heater core serving as a heat exchanger for heating the supply air, and an evaporator serving as a heat exchanger for cooling the supply air. The heater core is supplied with engine cooling water as a heat transfer medium from a water pump **8** which is one of accessories driven by the engine. In the heater core, the supply air is heated by heat exchange with the engine cooling water. On the other hand, the evaporator is supplied with refrigerant as another heat transfer medium from a compressor **6** which is another of the accessories driven by the engine. In the evaporator, the supply air is cooled by heat exchange with the refrigerant.

The air conditioning system **1** also has an air conditioning control unit **11** for controlling after-mentioned various actuators based on input information from after-mentioned various passenger-operable operating switches and after-mentioned various sensors.

The passenger-operable operating switches are disposed on a control panel and include an air conditioning switch **12** for bringing the compressor **6** into operation as necessary, a blower switch **13** for turning the blower on to supply air into the cabin, a temperature control switch **14** for setting the desired cabin temperature (wherein the temperature set by the passenger through the temperature control switch **14** is the desired cabin temperature), a mode switch **15** for selecting among blow-off ports for the supply air (such as a vent blow-off port and a defroster blow-off port), and an air conditioning priority switch **16** for giving a higher priority to air conditioning to inhibit an automatic stop of the engine. The blower switch **13** is a switch for bringing the air conditioning system **1** into operation. Whenever the blow switch **13** is ON, the air conditioning system **1** is in operation. Therefore, the blower switch **13** constitutes an air conditioning operation detecting device for detecting the operation of the air conditioning system **1.**

These operating switches are also for detecting what operation has been done by the passenger and therefore also constitute individual detecting devices for air conditioning in the air conditioning system **1.** Specifically, the temperature control switch **14** not only constitutes a desired cabin temperature setting section for setting the desired cabin temperature but also constitutes a set temperature detecting device for detecting the temperature set by the passenger. The temperature control switch **14** is composed of a potentiometer. The mode switch **15** constitutes a selected blow-off port mode detecting device for detecting the mode of blow-off port presently selected by an after-mentioned mode actuator **33.** The mode switch **15** is also composed of a potentiometer like the temperature control switch **14.**

The sensors include an inside air temperature sensor **21** serving as a cabin temperature detecting device for detecting the temperature in the vehicle cabin (and provided only one per instrumental panel), an outside air temperature sensor **22** serving as an outside air temperature detecting device for detecting the outside air temperature around the vehicle, an insolation sensor **23** serving as a light intensity detecting device for detecting the intensity of sunlight (heat load of insolation), an evaporator sensor **24** for detecting the temperature of the evaporator, a water temperature sensor **25** serving as a water temperature detecting device for detecting the temperature of the engine cooling water, and a humidity sensor **26** serving as a humidity detecting device for detecting the humidity in the vehicle cabin. These sensors constitute, like the operating switches, individual detecting devices for air conditioning in the air conditioning system **1.**

The actuators include a blower motor **31** for actuating the blower, an air-mixing actuator **32** for adjusting, with an air-mixing damper, the opening degree of an opening for introducing part of the supply air cooled by the evaporator into a housing of the heater core, a mode actuator **33** for selectively operating blow-off port opening/closing dampers disposed in the plurality of blow-off ports, respectively, according to the mode switch **15** to select among the blow-off ports, and an inside/outside air actuator **34** for actuating an inside/outside air selecting damper for selecting between the inside air and outside air to be used as intake air. The mode actuator **33** constitutes a blow-off port selecting mechanism for selecting among the blow-off ports for supply air to the cabin.

The air-mixing damper is placed in the opening for introducing part of the supply air cooled by the evaporator into the housing of the heater core. The air-mixing damper is provided with an air-mixing damper position sensor **27** (e.g., potentiometer) for detecting the position of the air-mixing damper corresponding to the opening degree of the opening to control the air-mixing actuator **32.** The plurality of blow-off port opening/closing dampers are provided with individual blow-off port opening/closing damper position sensors **28** similar to the air-mixing damper position sensor **27,** and the inside/outside air selecting damper is provided with an inside/outside air selecting damper position sensor **29** similar to the air-mixing damper position sensor **27.** These damper position sensors **27** to **29** also constitute individual detecting devices for air conditioning in the air conditioning system **1.** Furthermore, the blow-off port opening/closing damper position sensors **28** constitutes, like the mode switch **15,** a selected blow-off port mode detecting device for detecting the mode of blow-off port presently selected by the mode actuator **33.**

The compressor **6** is equipped with a clutch for bringing the compressor **6** into mechanical engagement with or disengagement from the engine. The clutch operation is controlled by the air conditioning control unit **11** via the engine control unit **3.** Specifically, when the air conditioning control unit **11** determines that it is necessary to activate the compressor **6,** it sends a compressor ON signal to the engine control unit **3.** On receipt of the compressor ON signal, the engine control unit **3** puts the clutch into engagement.

The air conditioning control unit **11** controls the air-mixing actuator **32** and the other actuators so that the cabin temperature (actual cabin temperature) detected by the inside air temperature sensor **21** reaches a temperature (desired cabin temperature) set by the temperature control switch **14.** Thus, the air conditioning control unit **11** constitutes a supply air temperature controller for controlling the temperature of the supply air to the cabin.

The vehicle control unit **2** inputs information from an inhibitor switch **41** for detecting in which shift range the selector lever operated by the passenger is placed, a vehicle speed sensor **42** for detecting the vehicle speed and a brake switch **43** for detecting the step-on action of the brake pedal, and inputs through the air conditioning control unit **11** information from the air conditioning switch **12,** blower switch **13,** temperature control switch **14,** air conditioning priority switch **16,** inside air temperature sensor **21,** outside air temperature sensor **22** and water temperature sensor **25** and information on air conditioning. The vehicle speed sensor **42** constitutes a vehicle stop detecting device for detecting a stop of the vehicle.

The vehicle control unit **2** is configured to automatically stop the engine for a predetermined period if the following three conditions are satisfied: the vehicle is determined to be stopping based on the detection result of the vehicle speed sensor **42** (the vehicle speed detected by the vehicle speed sensor **42** is 0); the inhibitor switch **41** detects that the selector lever is in neutral range or parking range; and the brake switch **43** detects a step-on action of the brake pedal (hereinafter, if these three conditions are satisfied, this refers to that the automatic engine stop condition holds), and if, during operation of the air conditioning system **1** (during ON state of the blower switch **13),** the value relating to the capability of either one of the heat transfer media to heat or cool the supply air meets a specified condition (in this embodiment, a condition that the engine cooling water temperature Tw detected by the water temperature sensor **25** is equal to or higher than a specified temperature Tw0). When, however, the automatic engine stop condition becomes unsatisfied before the passage of the predetermined period, the automatic engine stop is ended at that time. Note that when the vehicle control unit **2** automatically stops the engine, it sends a stop signal to the engine control unit **3** to deactivate the igniter **4** and the fuel injector **5.**

On the other hand, if the value relating to the capability of either heat transfer medium to heat or cool the supply air does not meet the specified condition (the engine cooling water temperature Tw is lower than the specified temperature Tw0) even though the above automatic engine stop condition holds, the vehicle control unit **2** sends no stop signal to the engine control unit **3** and does not perform an automatic engine stop. If the automatic engine stop condition holds but the air conditioning system **1** is out of operation, the vehicle control unit **2** automatically stops the engine and holds the engine stopped until the automatic engine stop condition becomes unsatisfied.

The engine cooling water temperature Tw is a value relating to the capability of the engine cooling water to heat the supply air (i.e., the capability to heat the supply air becomes higher as the engine cooling water temperature Tw increases). Therefore, the water temperature sensor **25** constitutes an air conditioning capability detecting device for detecting a value relating to the capability of heat transfer medium to heat the supply air. Furthermore, the specified temperature Tw0 is set at a temperature (e.g., 65°C) at which the capability of the engine cooling water to heat the supply air can be kept at rather high level even when the engine is held stopped for the predetermined period. In this embodiment, the engine cooling water temperature Tw is also a value relating to the capability of refrigerant to cool the supply air. Therefore, the water temperature sensor **25** also constitute an air conditioning capability detecting device for detecting a value relating to the capability of heat transfer medium to cool the supply air. Specifically, if the engine cooling water temperature Tw is equal to or higher than the specified temperature Tw0, it can be assumed that a certain period of time has passed after engine start and that if the compressor **6** is continued to operate throughout the period, the refrigerant discharge pressure of the compressor **6** reaches or exceeds a specified pressure (a pressure at which the capability of the refrigerant to cool the supply air can be kept at rather high level even when the engine is held stopped for the predetermined period). Therefore, if the engine cooling water temperature Tw is equal to or higher than the specified temperature Tw0, both the capabilities of heat transfer media to heat and cool the supply air can be maintained at rather high level even if the engine is held stopped for the predetermined period.

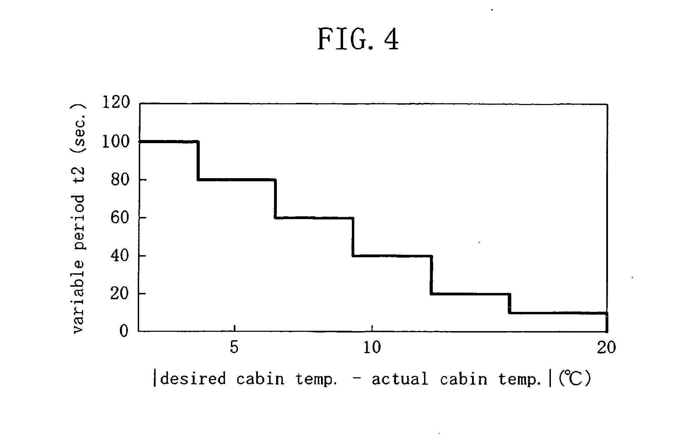

In this embodiment, when the air conditioning system **1** is in operation and the engine cooling water temperature Tw is equal to or higher than the specified temperature Tw0 and additionally when the outside air temperature Ta detected by the outside air temperature sensor **22** is within a first specified range, the vehicle control unit **2** sets the predetermined period at a fixed period t1 (e.g., **10** seconds) or longer period. Specifically, the predetermined period is a period obtained by adding a variable period t2 to the fixed period t1. The variable period t2 is a period set based on the difference between the desired cabin temperature set by the temperature control switch **14** and the actual cabin temperature detected by the inside air temperature sensor **21.** It is preferable that as the difference between the desired and actual cabin temperatures increases, the variable period t2 is set shorter (see Figure **4**). The predetermined period may only be a fixed period. The fixed period in this case, however, is preferably longer than the first-mentioned fixed period to which the variable period will be added.

On the other hand, when the air conditioning system **1** is in operation and the engine cooling water temperature Tw is equal to or higher than the specified temperature Tw0 but additionally when the outside air temperature Ta is out of the first specified range, the predetermined period is set at the variable period t2 and the engine is automatically stopped for that period t2. In this embodiment, however, when the outside air temperature Ta is out of the first specified range and within a second specified range (a range including and wider than the first specified range), the predetermined period is set at the variable period t2 and the engine is automatically stopped for that period t2. In short, when the engine cooling water temperature Tw is equal to or higher than the specified temperature Tw0 during operation of the air conditioning system **1** and the outside air temperature Ta is within the second specified range, the engine is automatically stopped for the predetermined period (t1+t2 or just t2).

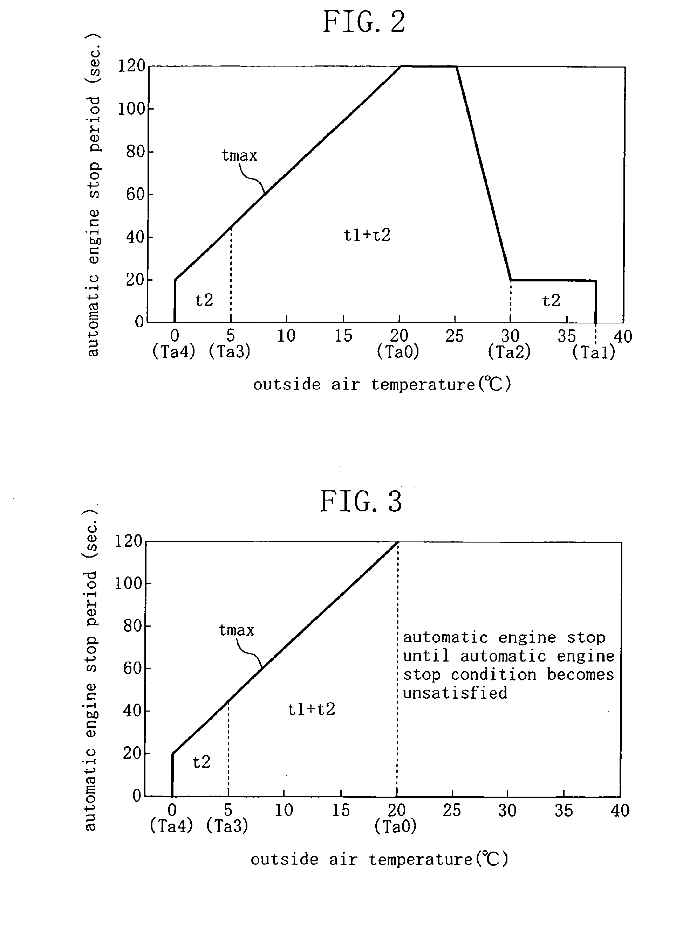

Furthermore, the predetermined period is limited so as not to exceed a maximum value tmax (see Figures **2** and **3**) set according to the outside air temperature Ta in both the cases where it is set at the period obtained by adding the variable period t2 to the fixed period t1 and where it is set at the variable period t2.

Examples of relation between outside air temperature Ta and predetermined period (automatic stop period) are shown in Figures **2** and **3** (Figure **2** shows the case where the air conditioning switch **12** and the blower switch **13** are both ON, while Figure **3** shows the case where the air conditioning switch **12** is OFF and the blower switch **13** is ON). An example of relation between the difference between desired and actual cabin temperatures and variable period t2 is shown in Figure **4.** When the air conditioning switch **12** and the blower switch **13** are both ON, the first specified range is 5°C (ta3) to 30°C (ta2) both inclusive and the second specified range is 0°C (ta4) to 37.5°C (ta1) both inclusive. In this case, at outside air temperatures out of the second specified range, an automatic engine stop is not carried out. On the other hand, when the air conditioning switch **12** is OFF and the blower switch **13** is ON, the first specified range is 5°C (ta3) to 20°C (ta0) both inclusive and the second specified range is 0°C (ta4) to 20°C (ta0) both inclusive. In this case, at outside air temperatures lower than 0°C (ta4), an automatic engine stop is not carried out like when the air conditioning switch **12** and the blower switch **13** are both ON. At outside air temperatures higher than 20°C (ta0), however, the engine is automatically stopped if the automatic engine stop condition holds. Additionally, the automatically stopped engine is held stopped until the automatic engine stop condition becomes unsatisfied.

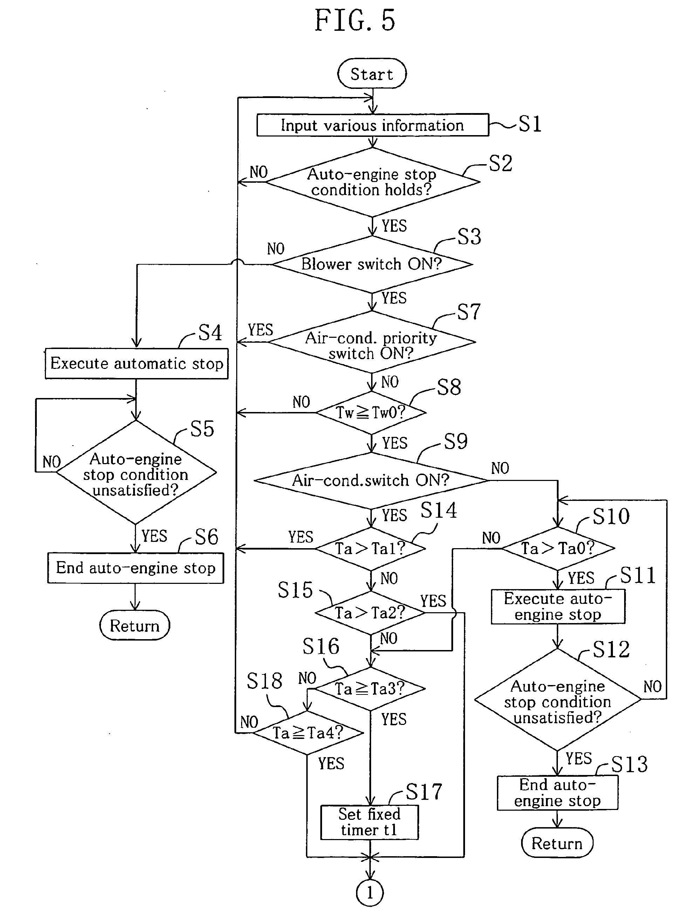

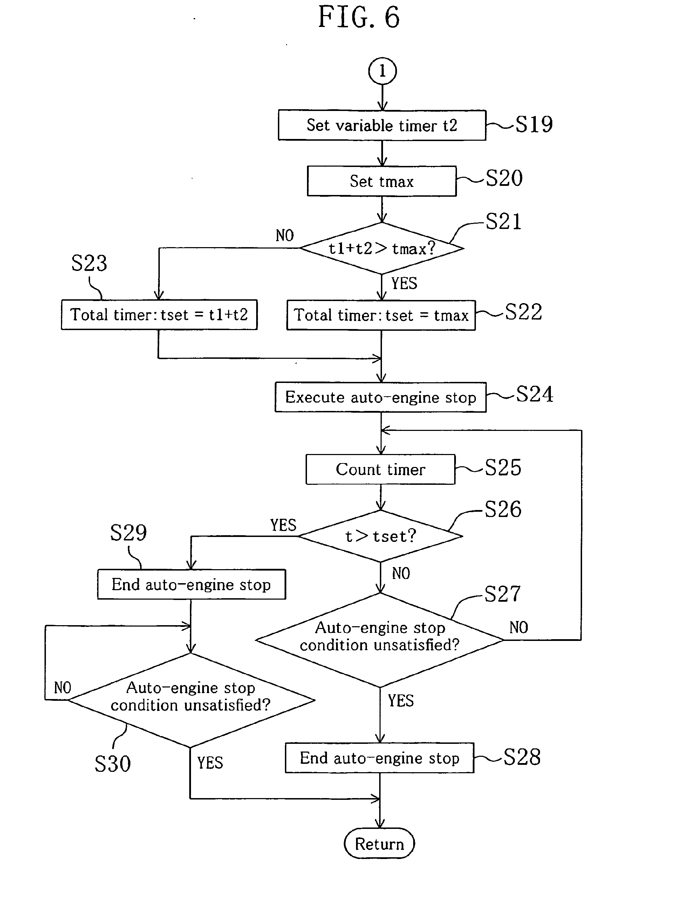

A specific control action of the vehicle control unit **2** will be described with reference to flow charts of Figures **5** and **6.** This control action starts when the ignition switch is turned ON.

First, in Step S**1**, information is received from various switches and sensors. In the next step S**2**, it is determined whether or not the automatic engine stop condition holds. If the determination in step S**2** is NO, the process returns to step S**1**. If the determination in Step S**2** is YES, the process proceeds to step S**3**.

In step S**3**, it is determined whether or not the blower switch **13** is ON. If the determination in step S**3** is NO, the process proceeds to step S**4** wherein the vehicle control unit **2** automatically stops the engine. In the next step S**5**, it is determined whether or not the automatic engine stop condition has become unsatisfied. If the determination in step S**5** is NO, the procedure in step S**5** is repeated. When the determination in step S**5** is turned YES, the process proceeds to step S**6** wherein the vehicle control unit **2** ends the automatic engine stop (i.e., restarts the engine) and then the process returns.

On the other hand, if the determination in step S**3** is YES, the process proceeds to step S**7** to determine whether or not the air conditioning priority switch **16** is ON. If the determination in step S**7** is YES, the process returns to step S**1**. If the determination in step S**7** is NO, the process proceeds to step S**8**.

In step S**8**, it is determined whether or not the engine cooling water temperature Tw is not lower than the specified temperature Tw0. If the determination in step S**8** is NO, the process returns to step S**1**. If the determination in step S**8** is YES, the process proceeds to step S**9**.

In step S**9**, it is determined whether or not the air conditioning switch **12** is ON. If the determination in step S**9** is NO, the process proceeds to step S**10.** If the determination in step S**9** is YES, the process proceeds to step S**14.**

In step S**10,** it is determined whether or not the outside air temperature Ta is higher than Ta0 (corresponding to 20°C in Figure **3**). If the determination in step S**10** is YES, the process proceeds to step S**11** wherein the vehicle control unit **2** automatically stops the engine, and then the process determines in the next step S**12** whether or not the automatic engine stop condition has become unsatisfied. If the determination in step S**12** is NO, the process returns to step S**10**. If the determination in step S**12** is YES, the process proceeds to step S**13** wherein the vehicle control unit **2** ends the automatic engine stop and then the process returns. On the other hand, if the determination in step S**10** is NO, the process proceeds to step S**16**.

In step S**14** to which the process proceeds when the determination in step S**9** is YES, it is determined whether or not the outside air temperature Ta is higher than Ta1 (corresponding to 37.5°C in Figure **2**). If the determination in step S**14** is YES, the process returns to step S**1.** If the determination in step S**14** is NO, the process proceeds to step S**15.**

In step S**15,** it is determined whether or not the outside air temperature Ta is higher than Ta2 (corresponding to 30°C in Figure **2**). If the determination in step S**15** is NO, the process proceeds to step S**16.** If the determination in step S**15** is YES, the process proceeds to step S**19.**

In step S**16** to which the process proceeds when the determination in step S**10** or S**15** is NO, it is determined whether or not the outside air temperature Ta is not lower than Ta3 (corresponding to 5°C in Figures **2** and **3**). If the determination in step S**16** is YES, the process proceeds to step S**17** to set the fixed timer t1, and then proceeds to step S**19.** If the determination in step S**16** is NO, the process proceeds to step S**18**.

In step S**18,** it is determined whether or not the outside air temperature Ta is not lower than Ta4 (corresponding to 0°C in Figures **2** and 3). If the determination in step S**18** is NO, the process returns to step S**1.** If the determination in step S**18** is YES, the process proceeds to step S**19.**

In step S**19,** the variable timer t2 is set according to the difference between the desired and actual cabin temperatures (see Figure **4**). In the next step S**20,** the maximum period tmax is set according to the outside air temperature Ta (see Figures **2** and **3).**

In the next step S**21,** it is determined whether or not the value t1+t2 (where t1 is 0 if the process does not proceed through step S**17**) is larger than tmax. If the determination in step S**21** is YES, the process proceeds to step S**22** to set the total timer tset at tmax in order to count the predetermined period, and then proceeds to step S**24.** If the determination in step S**21** is NO, the process proceeds to step S**23** to set the total timer tset at t1+t2 and then proceeds to step S**24.**

In step S**24,** the engine is automatically stopped. In the next step S**25,** the timer is counted. In the next step S**26,** it is determined whether or not the count time t is larger than tset.

If the determination in step S**26** is NO, the process proceeds to step S**27** to determine whether or not the automatic engine stop condition has become unsatisfied. If the determination in step S**27** is NO, the process returns to step S**25.** If the determination in step S**27** is YES, the process proceeds to step S**28** wherein the vehicle control unit **2** ends the automatic engine stop and then the process returns.

On the other hand, if the determination in step S**26** is YES, the process proceeds to step S**29** in which the vehicle control unit **2** ends the automatic engine stop, and the process determines in the next step S**30** whether or not the automatic engine stop condition has become unsatisfied. If the determination in step S**30** is NO, the procedure in step S**30** is repeated until the determination becomes YES. When the determination in step **30** becomes YES, the process returns.

When the automatic engine stop condition holds during the OFF state of the blower switch **13**, the vehicle control unit **2** controls the engine to automatically stop. Thereafter, when the automatic engine stop condition becomes unsatisfied, the vehicle control unit **2** ends the automatic stop of the engine. In other words, since the air conditioning system **1** is out of operation, the vehicle control unit **2** automatically stops the engine until the automatic engine stop condition becomes unsatisfied.

When the air conditioning priority switch **16** is ON during the ON state of the blower switch **13,** or if the engine cooling water temperature Tw is lower than the specified temperature Tw0 even when the air conditioning priority switch **16** is OFF during the ON state of the blower switch **13,** the vehicle control unit **2** does not perform an automatic engine stop. In other words, if the passenger does not wish to automatically stop the engine during operation of the air conditioning system **1** or if the air conditioning performance will be deteriorated by an automatic engine stop, the vehicle control unit **2** does not perform an automatic engine stop.

On the other hand, if the engine cooling water temperature Tw is equal to or higher than the specified temperature Tw0 when the air conditioning priority switch **16** is OFF during the ON state of the blower switch **13,** the vehicle control unit **2** automatically stops the engine for the predetermined period on condition that the outside air temperature Ta is within the second specified range (which is Ta4 to Ta1 both inclusive for the ON state of the air conditioning switch **12** or Ta4 to Ta0 both inclusive for the OFF state of the air conditioning switch **12**). In particular, when the outside air temperature Ta is within the first specified range (which is Ta3 to Ta2 both inclusive for the ON state of the air conditioning switch **12** or Ta3 to Ta0 both inclusive for the OFF state of the air conditioning switch **12**), the predetermined period is set at a period obtained by adding the variable period t2 (determined by the difference between the desired and actual cabin temperatures) to the fixed period t1. When the outside air temperature Ta is out of the first specified range and within the second specified range (i.e., Ta4 to Ta3 both inclusive or Ta2 to Ta1 both inclusive for the ON state of the air conditioning switch **12** or Ta4 to Ta3 both inclusive for the OFF state of the air conditioning switch **12**), the predetermined period is set at just the variable period t2. The predetermined period, however, is limited so as not to exceed the maximum value tmax set according to the outside air temperature Ta.

It is to be noted that if the automatic engine stop condition becomes unsatisfied before the passage of the predetermined period, as for example because the stepping on the brake pedal is cancelled, the automatic engine stop is ended at that time.

According to the present embodiment, the engine cooling water temperature is detected as a value relating to the capabilities of heat transfer media to heat and cool the supply air, and the engine is automatically stopped for the predetermined period on condition that the automatic engine stop condition holds during operation of the air conditioning system **1** and that the detected temperature is equal to or higher than the specified temperature (the temperature at which the capabilities of heat transfer media to heat and cool the supply air can be held at rather high level even if the engine is stopped for the predetermined period). Therefore, even if the engine is automatically stopped, the air conditioning performance can be held at high level so as not to give uncomfortable feeling to passengers. Furthermore, since the engine cooling water temperature reaches or exceeds the specified temperature after the passage of a certain period of time from engine start, the frequency with which an automatic engine stop occurs can be increased, which provides satisfactory effects of fuel efficiency improvement and exhaust gas reduction. In addition, since the predetermined period is set according to the difference between the desired and actual cabin temperatures, the predetermined period can be extended as much as possible, which further enhances the effects of fuel efficiency improvement and exhaust gas reduction.

In the above embodiment, the water temperature sensor **25** for detecting the temperature of engine cooling water is used as an air conditioning capability detecting device. As shown in broken lines in Figure **1,** a pressure sensor **7** for detecting the refrigerant discharge pressure of the compressor **6** can be used as an air conditioning capability detecting device. More specifically, the pressure sensor **7** is disposed at the refrigerant discharge port of the compressor **6** and information output from the pressure sensor **7** is input to the vehicle control unit **2.** In this case, during heating of the supply air (when the compressor **6** is out of operation), the engine is automatically stopped for the predetermined period on condition that the engine cooling water temperature is equal to or higher than the specified temperature as in the above embodiment. On the other hand, during cooling of the supply air (during operation of the compressor **6**), the engine is automatically stopped for the predetermined period on another condition that the refrigerant discharge pressure detected by the pressure sensor **7** is equal to or higher than a specified pressure. In this case, a "compressor operation determining step" of determining whether or not the compressor **6** is in operation is inserted between steps S**7** and S**8**. If the compressor **6** is out of operation, the process proceeds to step S**8**. If the compressor **6** is in operation, the process proceeds to a newly introduced "pressure determination step" of determining whether or not the refrigerant discharge pressure is equal to or higher than the specified pressure. If the determination in the pressure determination step is YES, the process proceeds to step S**9** as in step S**8**. If the determination in the pressure determination step is NO, the process returns to step S**1**.

Furthermore, in the above embodiment, the automatic engine stop control system is composed of the vehicle control unit **2.** The automatic engine stop control system of the present invention, however, is not limited to the vehicle control unit **2** but may be composed of the air conditioning control unit **11,** or the engine control unit **3,** or a plurality of units including these units.

### Embodiment 2

This embodiment is different from the first embodiment in how the vehicle control unit **2** controls automatic engine stop.

Specifically, in this embodiment, the vehicle control unit **2** is configured, when the automatic engine stop condition holds and the air conditioning system **1** is in operation (during ON state of the blower switch **13**), to automatically stop the engine for a first predetermined period if the value relating to the capability of either one of the heat transfer media to heat or cool the supply air meets a first specified condition (in this embodiment, a condition that the engine cooling water temperature Tw detected by the water temperature sensor **25** is equal to or higher than a first specified temperature Tw1), or to automatically stop the engine for a second predetermined period shorter than the first predetermined period if the value relating to the capability of either one of the heat transfer media to heat or cool the supply air meets a second specified condition lower in the capability of the heat transfer medium to heat or cool the supply air than when meeting the first specified condition (in this embodiment, a condition that the engine cooling water temperature Tw is lower than the first specified temperature Tw1 and equal to or higher than a second specified temperature Tw2 (a temperature lower than the first specified temperature Tw1)). When, however, the automatic engine stop condition becomes unsatisfied before the passage of the first or second predetermined period, the automatic engine stop is ended at that time.

On the other hand, if the value relating to the capability of either heat transfer medium to heat or cool the supply air does not meet the second specified condition (the engine cooling water temperature Tw is lower than the second specified temperature Tw2) even though the above automatic engine stop condition holds, the vehicle control unit **2** sends no stop signal to the engine control unit **3** and does not perform an automatic engine stop. If the automatic engine stop condition holds but the air conditioning system **1** is out of operation, the vehicle control unit **2** automatically stops the engine and holds the engine stopped until the automatic engine stop condition becomes unsatisfied.

Also in this embodiment, the engine cooling water temperature Tw is a value relating to the capability of the engine cooling water to heat the supply air. Therefore, the water temperature sensor **25** constitutes an air conditioning capability detecting device for detecting a value relating to the capability of heat transfer medium to heat the supply air. Furthermore, the first specified temperature Tw1 is set at a temperature (e.g., 75°C) at which the capability of the engine cooling water to heat the supply air can be kept at high level even when the engine is held stopped for the first predetermined period. The second specified temperature Tw2 is set at a temperature (e.g., 60°C) at which the capability of the engine cooling water to heat the supply air decreases as compared with the first specified temperature Tw1 but can still be kept at rather high level even when the engine is held stopped for the second predetermined period shorter than the first predetermined period. In this embodiment, the engine cooling water temperature Tw is also a value relating to the capability of refrigerant to cool the supply air. Therefore, the water temperature sensor **25** also constitutes an air conditioning capability detecting device for detecting the capability of heat transfer medium to cool the supply air. Specifically, if the engine cooling water temperature Tw is equal to or higher than the first specified temperature Tw1, it can be assumed that a certain period of time has passed after engine start and that if the compressor **6** is continued to operate throughout the period, the refrigerant discharge pressure of the compressor **6** reaches or exceeds a first specified pressure (a pressure at which the capability of the refrigerant to cool the supply air can be kept at high level even when the engine is held stopped for the first predetermined period). Likewise, if the engine cooling water temperature Tw is lower than the first specified temperature Tw1 and equal to or higher than the second specified temperature Tw2, it can be assumed that the refrigerant discharge pressure of the compressor **6** is lower than the first specified pressure and equal to or higher than a second specified pressure (a pressure which is lower than the first specified pressure and at which the capability of the refrigerant to cool the supply air can be kept at rather high level even when the engine is held stopped for the second predetermined period). Therefore, if the engine cooling water temperature Tw is equal to or higher than the first specified temperature Tw1, both the capabilities of heat transfer media to heat and cool the supply air can be maintained at high level even if the engine is held stopped for the first predetermined period. Furthermore, if the engine cooling water temperature Tw is equal to or higher than the second specified temperature Tw2 and lower than the first specified temperature Tw1, both the capabilities of heat transfer media to heat and cool the supply air can be maintained at rather high level even if the engine is held stopped for the second predetermined period.

In addition, the vehicle control unit **2** is configured to automatically stop the engine for the first predetermined period when the vehicle is stopping but the air conditioning system **1** is in operation and the engine cooling water temperature Tw is equal to or higher than the first specified temperature Tw1 and additionally when the outside air temperature Ta detected by the outside air temperature sensor **22** is within a first specified range (different from the first specified range in the first embodiment). Furthermore, the vehicle control unit **2** is configured to automatically stop the engine for the second predetermined period when the vehicle is stopping but the air conditioning system **1** is in operation and the engine cooling water temperature Tw is equal to or higher than the second specified temperature Tw2 and lower than the first specified temperature Tw1 and additionally when the outside air temperature Ta is within a second specified range (different from the second specified range in the first embodiment) within but narrower than the first specified range.

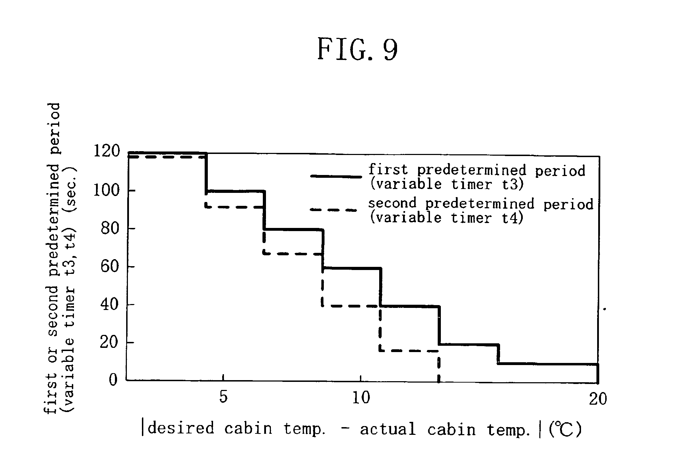

The first and second predetermined periods are periods set based on the difference between the desired cabin temperature set by the temperature control switch **14** and the actual cabin temperature detected by the inside air temperature sensor **21.** It is preferable that as the difference between the desired and actual cabin temperatures increases, the first and second predetermined periods are set shorter. Furthermore, it is preferable that as the difference between the desired and actual cabin temperatures increases, the difference between the first and second predetermined periods is set larger (see Figure **9**). In other words, the larger the difference between the desired and actual cabin temperatures, the larger the rate of shortening of the second predetermined period is set than that of the first predetermined period and the larger the difference between the first and second predetermined period is set.

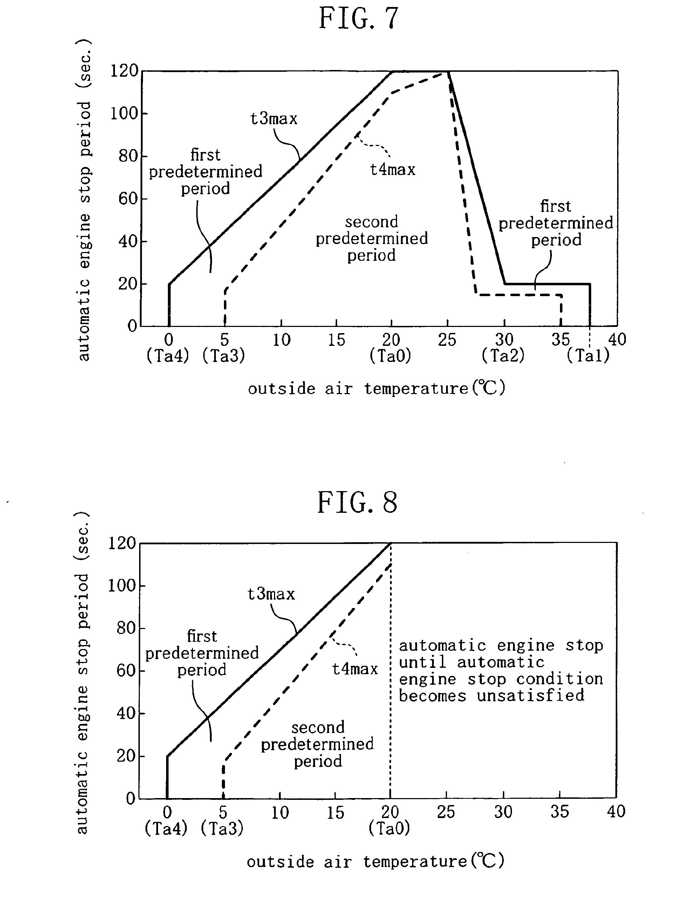

Furthermore, the first and second predetermined periods are limited so as not to exceed their maximum values, respectively, set according to the outside air temperature Ta, and the maximum value t4max of the second predetermined period is set shorter than the maximum value t3max for the first predetermined period (see Figures **7** and **8**).

Examples of relation between outside air temperature Ta and automatic stop period are shown in Figures **7** and **8** (Figure **7** shows the case where the air conditioning switch **12** and the blower switch **13** are both ON, while Figure **8** shows the case where the air conditioning switch **12** is OFF and the blower switch **13** is ON). An example of relation between the difference between desired and actual cabin temperatures and each of first and second predetermined periods is shown in Figure **9.** When the air conditioning switch **12** and the blower switch **13** are both ON, the first specified range is 0°C (ta4) to 37.5°C (ta1) both inclusive and the second specified range is 5°C (ta3) to 35°C (ta2) both inclusive. In this case, at outside air temperatures out of the first specified range, an automatic engine stop is not carried out. On the other hand, when the air conditioning switch **12** is OFF and the blower switch **13** is ON, the first specified range is 0°C (ta4) to 20°C (ta0) both inclusive and the second specified range is 5°C (ta3) to 20°C (ta0) both inclusive. In this case, at outside air temperatures lower than 0°C (ta4), an automatic engine stop is not carried out like when the air conditioning switch **12** and the blower switch **13** are both ON. At outside air temperatures higher than 20°C (ta0), however, the engine is automatically stopped if the automatic engine stop condition holds. Additionally, the automatically stopped engine is held stopped until the automatic engine stop condition becomes unsatisfied.

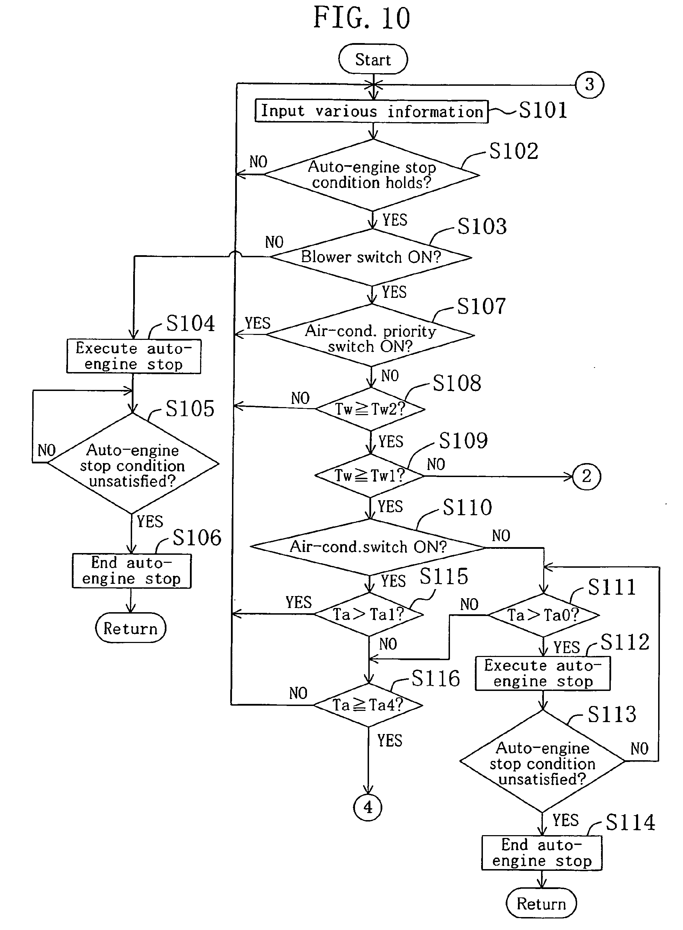

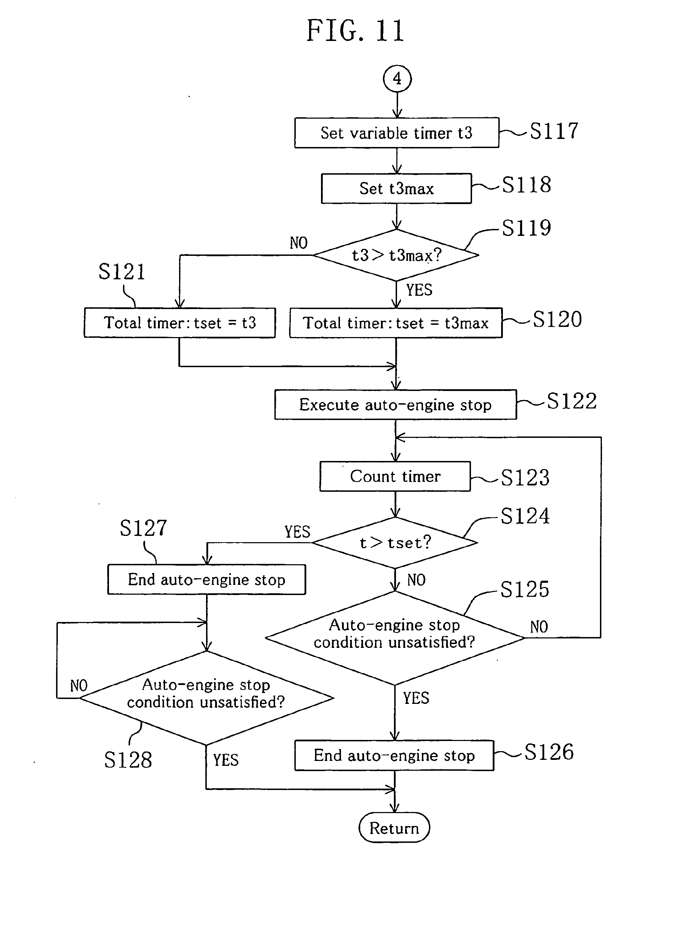

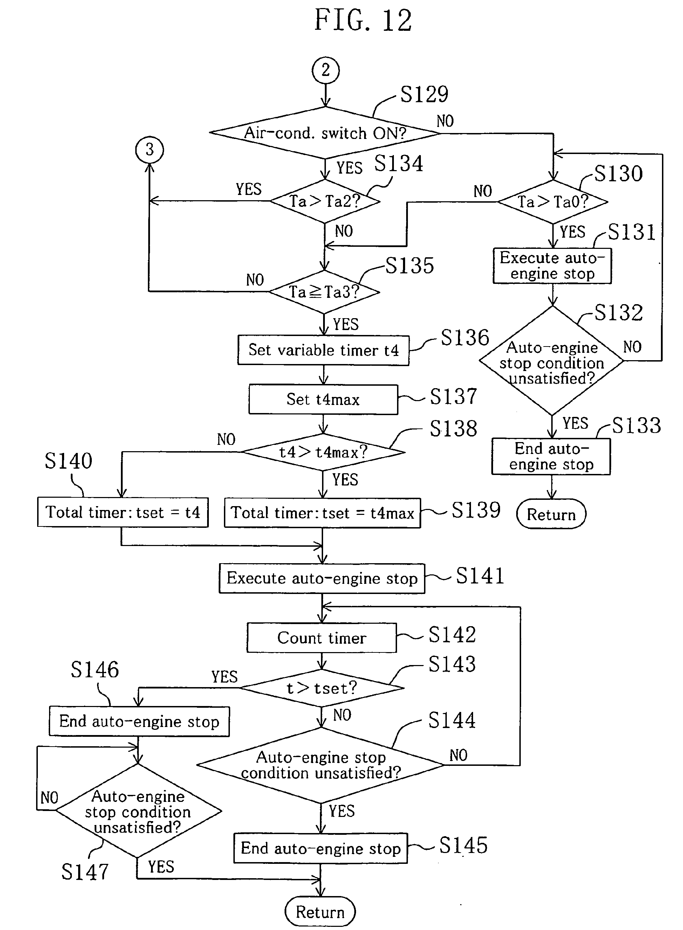

A specific control action of the vehicle control unit **2** will be described with reference to flow charts of Figures **10** to **12.** This control action starts when the ignition switch is turned ON.

First, in Step S**101,** information is received from various switches and sensors. In the next step S**102,** it is determined whether or not the automatic engine stop condition holds. If the determination in step S**102** is NO, the process returns to step S**101.** If the determination in Step S**102** is YES, the process proceeds to step S**103.**

In step S**103,** it is determined whether or not the blower switch **13** is ON. If the determination in step S**103** is NO, the process proceeds to step S**104** wherein the vehicle control unit **2** automatically stops the engine. In the next step S**105,** it is determined whether or not the automatic engine stop condition has become unsatisfied. If the determination in step S**105** is NO, the procedure in step S**105** is repeated. When the determination in step S**105** is turned YES, the process proceeds to step S**106** wherein the vehicle control unit **2** ends the automatic engine stop (i.e., restarts the engine) and then the process returns.

On the other hand, if the determination in step S**103** is YES, the process proceeds to step S**107** to determine whether or not the air conditioning priority switch **16** is ON. If the determination in step S**107** is YES, the process returns to step S**101**. If the determination in step S**107** is NO, the process proceeds to step S**108.**

In step S**108,** it is determined whether or not the engine cooling water temperature Tw is not lower than the second specified temperature Tw2. If the determination in step S**108** is NO, the process returns to step S**101.** If the determination in step S**108** is YES, the process proceeds to step S**109**

In step S**109,** it is determined whether or not the engine cooling water temperature Tw is not lower than the first specified temperature Tw1. If the determination in step S**109** is NO, the process proceeds to step S**129.** If the determination in step S**109** is YES, the process proceeds to step S**110.**

In step S**110,** it is determined whether or not the air conditioning switch **12** is ON. If the determination in step S**110** is NO, the process proceeds to step S**111.** If the determination in step S**110** is YES, the process proceeds to step S**115.**

In step S**111,** it is determined whether or not the outside air temperature Ta is higher than Ta0 (corresponding to 20°C in Figure **8**). If the determination in step S**111** is YES, the process proceeds to step S**112** wherein the vehicle control unit **2** automatically stops the engine, and then the process determines in the next step S**113** whether or not the automatic engine stop condition has become unsatisfied. If the determination in step S**113** is NO, the process returns to step S**111**. If the determination in step S**113** is YES, the process proceeds to step S**114** wherein the vehicle control unit **2** ends the automatic engine stop and then the process returns. On the other hand, if the determination in step S**111** is NO, the process proceeds to step S**116.**

In step S**115** to which the process proceeds when the determination in step S**110** is YES, it is determined whether or not the outside air temperature Ta is higher than Ta1 (corresponding to 37.5°C in Figure **7**). If the determination in step S**115** is YES, the process returns to step S**101.** If the determination in step S**115** is NO, the process proceeds to step S**116**.

In step S**116** to which the process proceeds when the determination in step S**111** or S**115** is NO, it is determined whether or not the outside air temperature Ta is not lower than Ta4 (corresponding to 0°C in Figures **7** and **8**). If the determination in step S**116** is NO, the process returns to step S**101**. If the determination in step S**116** is YES, the process proceeds to step S**117** to set the variable timer t3 according to the difference between the desired and actual cabin temperatures (see Figure **9**) and, in the next step S**118,** set the maximum period t3max according to the outside air temperature Ta (see Figures **7** and **8**).

In the next step S**119**, it is determined whether or not the value t3 is larger than t3max. If the determination in step S**119** is YES, the process proceeds to step S**120** to set the total timer tset at t3max in order to count the first predetermined period, and then proceeds to step S**122.** If the determination in step S**119** is NO, the process proceeds to step S**121** to set the total timer tset at t3 and then proceeds to step S**122.**

In step S**122,** the engine is automatically stopped. In the next step S**123,** the timer is counted. In the next step S**124,** it is determined whether or not the count time t is larger than tset.

If the determination in step S**124** is NO, the process proceeds to step S**125** to determine whether or not the automatic engine stop condition has become unsatisfied. If the determination in step S**125** is NO, the process returns to step S**123.** If the determination in step S**125** is YES, the process proceeds to step S**126** wherein the vehicle control unit **2** ends the automatic engine stop and then the process returns.

On the other hand, if the determination in step S**124** is YES, the process proceeds to step S**127** in which the vehicle control unit **2** ends the automatic engine stop, and the process determines in the next step S**128** whether or not the automatic engine stop condition has become unsatisfied. If the determination in step S**128** is NO, the procedure in step S**128** is repeated until the determination becomes YES. When the determination in step **128** becomes YES, the process returns.

In step S**129** to which the process proceeds when the determination in step S**109** is NO, it is determined whether or not the air conditioning switch **12** is ON. If the determination in step S**129** is NO, the process proceeds to step S**130.** If the determination in step S**129** is YES, the process proceeds to step S**134.**

In step S**130**, it is determined whether or not the outside air temperature Ta is higher than Ta0. If the determination in step S**130** is YES, the process proceeds to step S**131** wherein the vehicle control unit **2** automatically stops the engine, and then the process determines in the next step S**132** whether or not the automatic engine stop condition has become unsatisfied. If the determination in step S**132** is NO, the process returns to step S**130.** If the determination in step S**132** is YES, the process proceeds to step S**133** wherein the vehicle control unit **2** ends the automatic engine stop and then the process returns. On the other hand if the determination in step S**130** is NO, the process proceeds to step S**135.**

In step S**134** to which the process proceeds when the determination in step S**129** is YES, it is determined whether or not the outside air temperature Ta is higher than Ta2 (corresponding to 35°C in Figure **7**). If the determination in step S**134** is YES, the process returns to step S**101.** If the determination in step S**134** is NO, the process proceeds to step S**135.**

In step S**135** to which the process proceeds when the determination in step S**130** or S**134** is NO, it is determined whether or not the outside air temperature Ta is not lower than Ta3 (corresponding to 5°C in Figures **7** and **8**). If the determination in step S**135** is NO, the process returns to step S**101.** If the determination in step S**135** is YES, the process proceeds to step S**136** to set the variable timer t4 according to the difference between the desired and actual cabin temperatures (see Figure **9**), and in the next step S**137** sets the maximum period t4max according to the outside air temperature Ta (see Figures **7** and **8**).

In the next step S**138,** it is determined whether or not the value t4 is larger than t4max. If the determination in step S**138** is YES, the process proceeds to step S**139** to set the total timer tset at t4max in order to count the second predetermined period, and then proceeds to step S**141.** If the determination in step S**138** is NO, the process proceeds to step S**140** to set the total timer tset at t4 and then proceeds to step S**141**.

In step S**141,** the engine is automatically stopped. In the next step S**142,** the timer is counted. In the next step S**143,** it is determined whether or not the count time t is larger than tset.

If the determination in step S**143** is NO, the process proceeds to step S**144** to determine whether or not the automatic engine stop condition has become unsatisfied. If the determination in step S**144** is NO, the process returns to step S**142.** If the determination in step S**144** is YES, the process proceeds to step S**145** wherein the vehicle control unit **2** ends the automatic engine stop and then the process returns.

On the other hand, if the determination in step S**143** is YES, the process proceeds to step S**146** in which the vehicle control unit **2** ends the automatic engine stop, and the process determines in the next step S**147** whether or not the automatic engine stop condition has become unsatisfied. If the determination in step S**147** is NO, the procedure in step S**147** is repeated until the determination becomes YES. When the determination in step **147** becomes YES, the process returns.

When the automatic engine stop condition holds during the OFF state of the blower switch **13,** the vehicle control unit **2** controls the engine to automatically stop. Thereafter, when the automatic engine stop condition becomes unsatisfied, the vehicle control unit **2** ends the automatic stop of the engine. In other words, since the air conditioning system **1** is out of operation, the vehicle control unit **2** automatically stops the engine until the automatic engine stop condition becomes unsatisfied.

When the air conditioning priority switch **16** is ON during the ON state of the blower switch **13,** or if the engine cooling water temperature Tw is lower than the second specified temperature Tw2 even when the air conditioning priority switch **16** is OFF during the ON state of the blower switch **13,** the vehicle control unit **2** does not perform an automatic engine stop. In other words, if the passenger does not wish to automatically stop the engine during operation of the air conditioning system **1** or if the air conditioning performance will be deteriorated by an automatic engine stop, the vehicle control unit **2** does not perform an automatic engine stop.

On the other hand, if the engine cooling water temperature Tw is equal to or higher than the fist specified temperature Tw1 when the air conditioning priority switch **16** is OFF during the ON state of the blower switch **13,** the vehicle control unit **2** automatically stops the engine for the first predetermined period on condition that the outside air temperature Ta is within the first specified range (which is Ta4 to Ta1 both inclusive for the ON state of the air conditioning switch **12** or Ta4 to Ta0 both inclusive for the OFF state of the air conditioning switch **12**). On the other hand, if the engine cooling water temperature Tw is equal to or higher than the second specified temperature Tw2 and lower than the first specified temperature Tw1 when the air conditioning priority switch **16** is OFF during the ON state of the blower switch **13,** the vehicle control unit **2** automatically stops the engine for the second predetermined period on condition that the outside air temperature Ta is within the second specified range (which is Ta3 to Ta2 both inclusive for the ON state of the air conditioning switch **12** or Ta3 to Ta0 both inclusive for the OFF state of the air conditioning switch **12**). The first and second predetermined periods are set according to the difference between the desired and actual cabin temperatures. The larger the difference between the desired and actual cabin temperatures, the shorter the first and second predetermined periods become and the larger the difference between the first and second periods becomes. Furthermore, the first and second predetermined periods are limited so as not to exceed their maximum values, respectively, set according to the outside air temperature Ta, and the maximum t4max for the second predetermined period is set shorter than the maximum t3max for the first predetermined period.

It is to be noted that if the automatic engine stop condition has become unsatisfied before the passage of the first or second predetermined period, as for example because the stepping on the brake pedal is cancelled, the automatic engine stop is ended at that time.

According to the present embodiment, when the automatic engine stop condition holds during operation of the air conditioning system **1,** the engine is automatically stopped for the first predetermined period if the engine cooling water temperature is equal to or higher than the first specified temperature, or automatically stopped for the second predetermined period shorter than the first predetermined period if the engine cooling water temperature is equal to or higher than the second specified temperature and lower than the first specified temperature (i.e., if it is a temperature at which the capabilities of heat transfer media to heat and cool the supply air decrease as compared with the first specified temperature). Therefore, when the capabilities of heat transfer media to heat and cool the supply air are low, the automatic engine stop period is shortened to suppress deterioration in the air conditioning performance due to an automatic engine stop, which avoids giving uncomfortable feeling to passengers. Furthermore, since the engine cooling water temperature reaches or exceeds the second specified temperature after the passage of a certain period of time from engine start, the frequency with which an automatic engine stop occurs can be increased, which provides satisfactory effects of fuel efficiency improvement and exhaust gas reduction.

Also in the second embodiment, like the first embodiment, a pressure sensor **7** for detecting the refrigerant discharge pressure of the compressor **6** can be used as an air conditioning capability detecting device. In this case, during cooling of the supply air (during operation of the compressor **6**), the engine is automatically stopped for a first predetermined period when the refrigerant discharge pressure detected by the pressure sensor **7** is equal to or higher than a first specified pressure, and automatically stopped for a second predetermined period when the refrigerant discharge pressure is equal to or higher than a second specified pressure and lower than the first specified pressure. On the other hand, during heating of the supply air (when the compressor **6** is out of operation), the engine is automatically stopped for the first predetermined period when the engine cooling water temperature is equal to or higher than the first specified temperature, and automatically stopped for the second predetermined period when the engine cooling temperature is equal to or higher than the second specified temperature and lower than the first specified temperature.

Furthermore, also in the second embodiment, the automatic engine stop control system is not limited to the vehicle control unit **2** but may be composed of the air conditioning control unit **11,** or the engine control unit **3,** or a plurality of units including these units.

### Embodiment 3

In this embodiment, the automatic engine stop control system is composed of the vehicle control unit **2** and the air conditioning control unit **11** and the air conditioning control unit **11** not only controls the temperature of supply air to the cabin but also detects failures in the plurality of detecting devices for air conditioning in the air conditioning system **1** (such as operating switches and sensors described in the first embodiment).

Specifically, in this embodiment, the vehicle control unit **2** is configured to automatically stop the engine for a predetermined period when the automatic engine stop condition holds and the air conditioning system **1** is in operation (during ON state of the blower switch **13**) and in a specified condition. When, however, the automatic engine stop condition becomes unsatisfied before the passage of the predetermined period, the automatic engine stop is ended at that time. Note that the specified condition refers to, like the first embodiment, a condition that the engine cooling water temperature Tw detected by the water temperature sensor **25** is equal to or lower than a specified temperature Tw0.

Furthermore, the vehicle control unit **2** is configured to automatically stop the engine for a predetermined period when the engine cooling water temperature Tw is equal to or higher than the specified temperature Tw0 during operation of the air conditioning system **1** and the outside air temperature Ta detected by the outside air temperature sensor **22** is within a specified range (the same range as in the second specified range in the first embodiment).

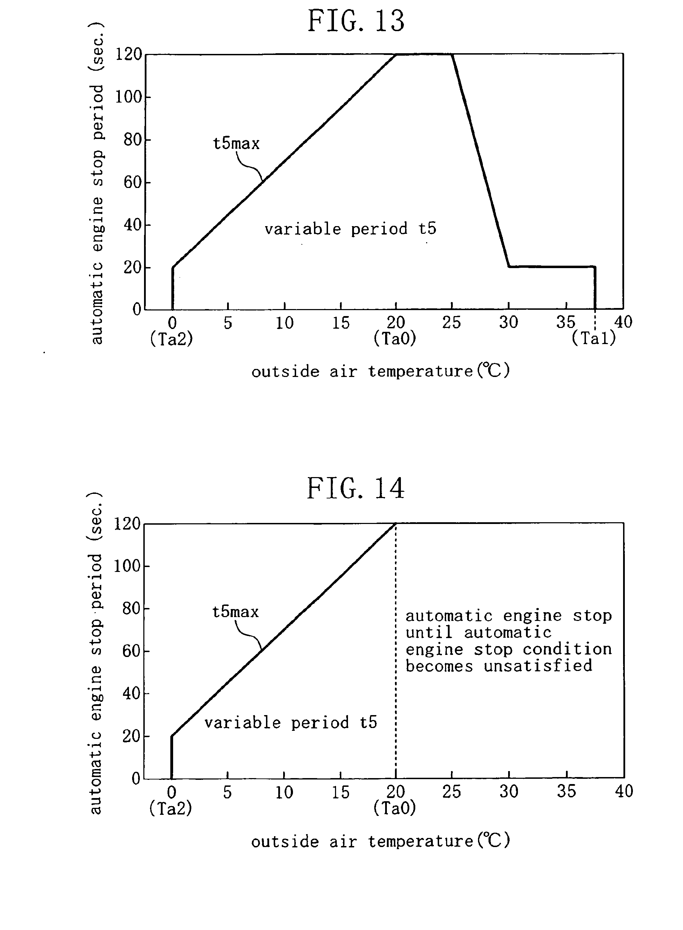

The predetermined period is, like the variable period t2 in the first embodiment, a period (hereinafter, referred to as a variable period t5) set based on the difference between the desired cabin temperature set by the temperature control switch **14** and the actual cabin temperature detected by the inside air temperature sensor **21.** It is preferable that as the difference between the desired and actual cabin temperatures is larger, the variable period t5 is set shorter. Furthermore, the predetermined period is limited so as not to exceed a maximum value t5max (see Figures **13** and **14**) set according to the outside air temperature Ta.

Examples of relation between the outside air temperature Ta and predetermined period (automatic stop period) are shown in Figures **13** and **14** (Figure **13** shows the case where the air conditioning switch **12** and the blower switch **13** are both ON, while Figure **14** shows the case where the air conditioning switch **12** is OFF and the blower switch **13** is ON). When the air conditioning switch **12** and the blower switch **13** are both ON, the specified range is 0°C (ta2) to 37.5°C (ta1) both inclusive. In this case, at outside air temperatures out of the specified range, an automatic engine stop is not carried out. On the other hand, when the air conditioning switch **12** is OFF and the blower switch **13** is ON, the specified range is 0°C (ta2) to 20°C (ta0) both inclusive. In this case, at outside air temperatures lower than 0°C (ta2), an automatic engine stop is not carried out like when the air conditioning switch **12** and the blower switch **13** are both ON. At outside air temperatures higher than 20°C (ta0), however, the engine is automatically stopped if the automatic engine stop condition holds. Additionally, the automatically stopped engine is held stopped until the automatic engine stop condition becomes unsatisfied.

In place of the above control, the control as described in the first embodiment (Figures **2** and **3**) or the control as described in the second embodiment (Figures **7** and **8**) may be carried out.

When the plurality of detecting devices for air conditioning in the air conditioning system **1** work properly, the vehicle control unit **2** automatically stops the engine, as already discussed, if the automatic engine stop condition holds and if the air conditioning system **1** is in operation and in the specified condition. When failure is detected in any of the detecting devices, however, the air conditioning control unit **11** permits or inhibits an automatic engine stop of the vehicle control unit **2** depending upon in which detecting device failure has been detected.

More specifically, the air conditioning control unit **11** constitutes a failure detecting device for detecting failure in the detecting devices (except for the air conditioning switch **12,** the blower switch **13** and the air conditioning priority switch **16**). When a detecting device shows a detected value which can be considered to be apparently abnormal in light of detection results of other detecting devices or shows an unlikely detected value or when no change is observed in its detected values, the air conditioning control unit **11** determines that the detecting device is out of order.

First, when the detecting device in which failure has been detected is the inside air temperature sensor **21,** the outside air temperature sensor **22,** the water temperature **25,** the mode switch **15,** the air-mixing damper position sensor **27** or the blow-off port opening/closing damper position sensor **28** (these six detecting devices are hereinafter referred to as specific detecting devices), the air conditioning control unit **11** determines that the detecting device having much influence on air conditioning is out of order and inhibits in principle an automatic engine stop of the vehicle control unit **2** (i.e., sets the enabling flag F in the after-mentioned flow chart at 0 and sends it to the vehicle control unit **2**).

In this case, the air conditioning control unit **11** inhibits an automatic engine stop of the vehicle control unit **2** until a first predetermined period T1 passes after the ignition switch **20** is turned ON. After the passage of the first predetermined period T1, however, the air conditioning control unit **11** permits an automatic engine stop of the vehicle control unit **2** (i.e., sets the enabling flag F at 1 and sends it to the vehicle control unit **2**). Therefore, if the first predetermined period T1 is set at a period of time (e.g., 10 minutes) after the passage of which the engine cooling water temperature or the refrigerant discharge pressure of the compressor becomes relatively high, the air conditioning performance can be kept at rather high level even if the engine is automatically stopped after the passage of the first predetermined period T1.

On the other hand, if the temperature control switch **14** detects a change in the set temperature after the passage of the first predetermined period from the time when the ignition switch has been turned ON, the air conditioning control unit **11** inhibits an automatic engine stop of the vehicle control unit **2.** Thereafter, if the temperature control switch **14** detects no further change in the set temperature until a second predetermined period T2 (e.g., 5 to 10 minutes) passes after the temperature control switch **14** detects the first change in the set temperature, the air conditioning control unit **11** permits an automatic engine stop of the vehicle control unit **2.** Namely, if the set temperature has been changed, this means that the passenger is feeling uncomfortable. According to this embodiment, a suitable selection can be made between inhibition and permission of an automatic engine stop according to the passenger's operation.

Secondly, when the detecting device in which failure has been detected is the water temperature sensor **25** and the outside air temperature detected by the outside air temperature sensor **22** is equal to or higher than a reference temperature (e.g., 15°C), the air conditioning control unit **11** makes the first predetermined period T1 shorter than that when the outside air temperature is lower than the reference temperature. The reason for this is that when the outside air temperature is equal to or higher than the reference temperature, the engine cooling water temperature and the refrigerant discharge pressure rise in a shorter time than when the outside air temperature is lower than the reference temperature and no problem occur even if the first predetermined period is reduced.

Thirdly, when the detecting device in which failure has been detected is the mode switch **15** or the blow-off port opening/closing damper position sensor **28** and the humidity H detected by the humidity sensor **26** is larger than a specified value H0 (a humidity at which windshield fogging is likely to occur), the air conditioning control unit **11** inhibits an automatic engine stop of the vehicle control unit **2.** On the other hand, when the humidity H is equal to or smaller than the specified value H0, the air conditioning control unit **11** permits an automatic engine stop of the vehicle control unit **2.** In addition, in this embodiment, when the detecting device in which failure has been detected is the mode switch **15** or the blow-off port opening/closing damper position sensor **28,** the air conditioning control unit **11** inhibits an automatic engine stop of the vehicle control unit **2** until the first predetermined period T1 passes after the ignition switch is turned ON. After the passage of the first predetermined period T1, the air conditioning control unit **11** inhibits or permits an automatic engine stop of the vehicle control unit **2** depending on if the humidity H is higher than the specified value H0 or not, respectively. However, regardless of the passage of the first predetermined period T1, the air conditioning control unit **11** may inhibit or permit an automatic engine stop of the vehicle control unit **2** depending on if the humidity H is higher than the specified value H0 or not, respectively (i.e., even before the passage of the first predetermined period T1, the air conditioning control unit **11** may permit an automatic engine stop of the vehicle control unit **2** if the humidity H is equal to or lower than the specified value H0).

Fourthly, when the detecting device in which failure has been detected is the insolation sensor **23,** the temperature control switch **14** or other detecting devices which are not specific detecting devices, the air conditioning control unit **11** determines that the detecting device having less influence on air conditioning is out of order and permits an automatic engine stop of the vehicle control unit **2.**

Furthermore, when failure is detected in two or more detecting devices, the air conditioning control unit **11** may permit or inhibit an automatic engine stop of the vehicle control unit **2** depending upon the combination of the detecting devices in which failure has been detected. In such cases, however, it is preferable to give priority to air conditioning and inhibit an automatic engine stop regardless of in which detecting device failure has been detected.

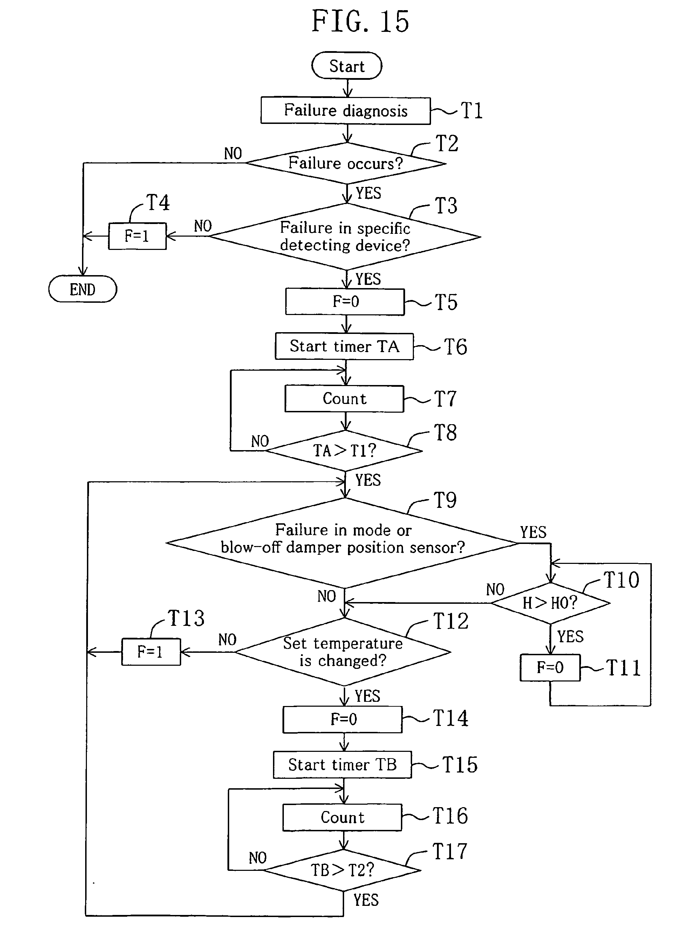

Now, description will be made of a specific control action of the air conditioning control unit **11** for permission/inhibition of automatic engine stop with reference to a flow chart of Figure **15.** This control action starts when the ignition switch is turned ON.

First, in step T**1**, failure diagnosis is made on the detecting devices for air conditioning in the air conditioning system **1.** In the next step T**2,** it is determined whether or not failure occurs in any detecting device. If the determination in step T**2** is NO, the process ends. If the determination in Step T**2** is YES, the process proceeds to step T**3** to determine whether or not the detecting device under failure is a specific detecting device.

If the determination in step T**3** is NO, the process proceeds to step T**4** to set the enabling flag F at 1 and then ends.

On the other hand, if the determination in step T**3** is YES, the process proceeds to step T**5** to set the enabling flag F at 0 and in the next step T**6** starts the timer TA. Then, the timer is counted in the next step T**7,** and it is determined in the next step T**8** whether or not the count time TA is greater than the first predetermined period T1. It is to be noted that when the outside air temperature Ta detected by the outside air temperature **22** is equal to or higher than the reference temperature, the first predetermined period T1 is made shorter than when the outside air temperature Ta is lower than the reference temperature, though this is not given in this flow chart.

If the determination in step T**8** is NO, the process returns to step T**7.** If the determination in step T**8** is YES, the process proceeds to step T**9** to determine whether or not the detecting device under failure is either of the mode switch **15** and the blow-off port opening/closing damper position sensor **28.** If the determination in step T**9** is YES, the process proceeds to step T**10.** If the determination in step T**9** is NO, the process proceeds to step T**12.**

In step T**10,** it is determined whether or not the humidity H detected by the humidity sensor **26** is larger than the specified value H0. If the determination in step T**10** is YES, the process proceeds to step T**11** to set the enabling flag F at 0 and then returns to step T**10.** If the determination in step T**10** is NO, the process proceeds to step T**12.**

In step T**12** to which the process proceeds when the determination in step T**9** or T**10** is NO, it is determined whether or not the temperature control switch **14** has detected a change in the set temperature. If the determination in step T**12** is NO, the process proceeds to step T**13** to set the enabling flag F at 1and then returns to step T**9.** If the determination in step T**12** is YES, the process proceeds to step T**14** to set the enabling flag F at 0 and then proceeds to step T**15** to start the timer TB. Then, the timer is counted in the next step T**16** and it is determined in the next step T**17** whether or not the count time TB is larger than the second predetermined period T2.

If the determination in step T**17** is NO, the process returns to step T**16.** If the determination in step T**17** is YES, the process returns to step T**9.**

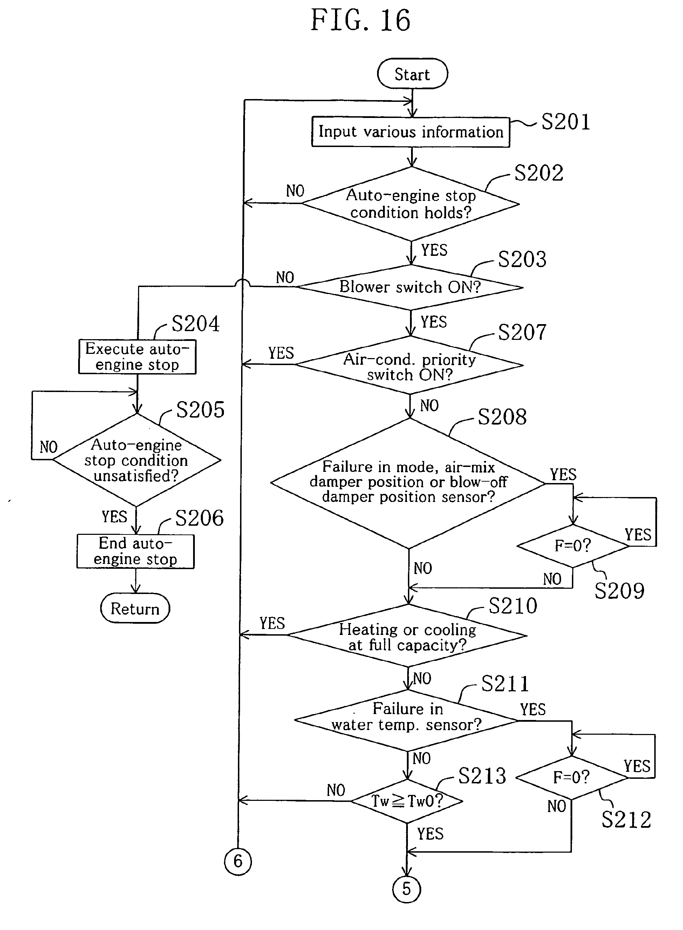

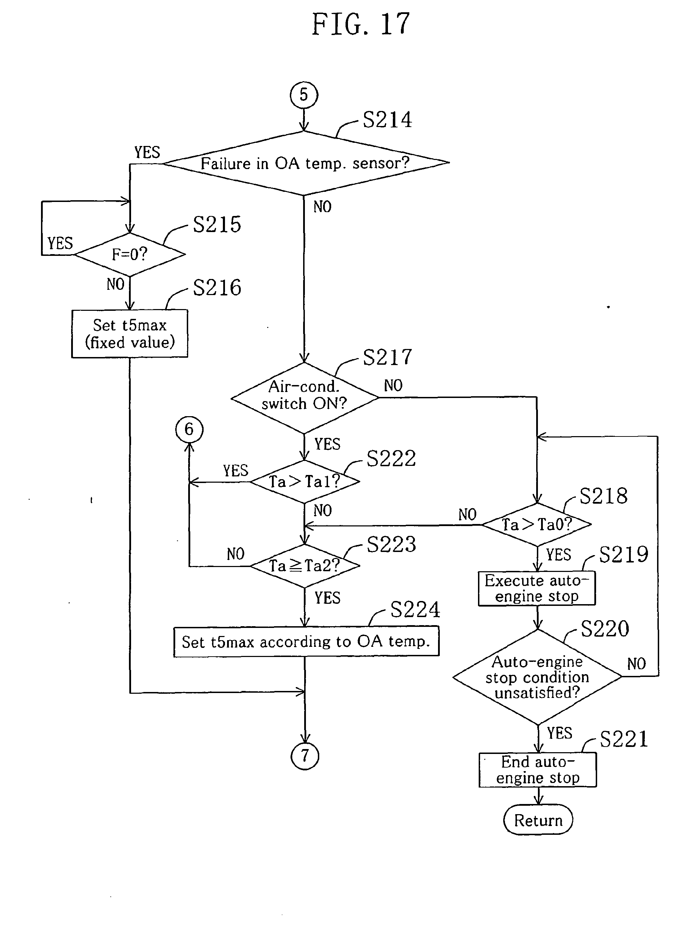

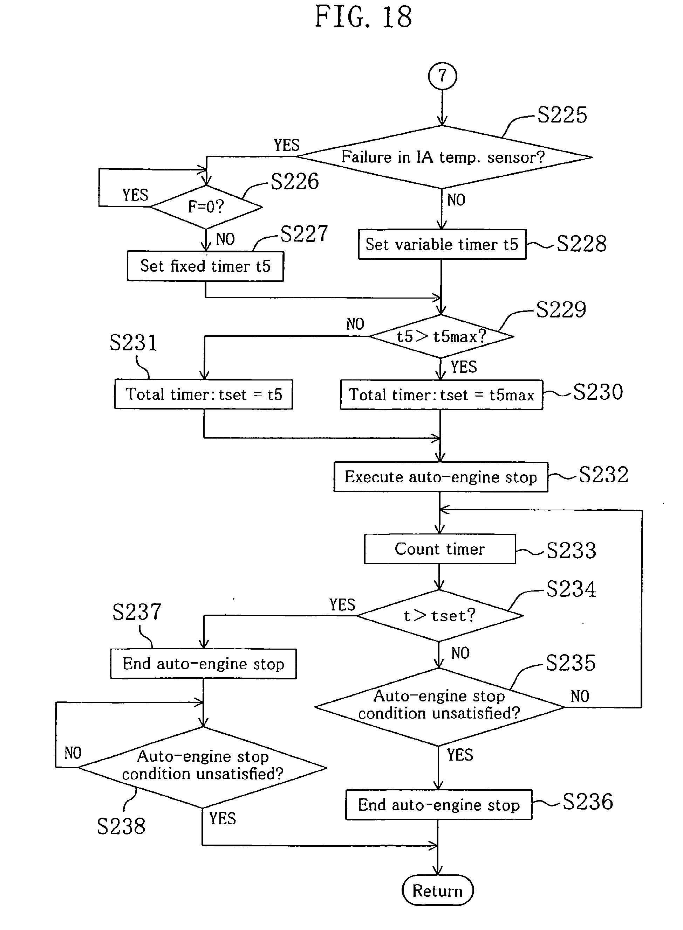

Next, a specific control action of the vehicle control unit **2** will be described with reference to flow charts of Figures **16** to **18.** This control action also starts when the ignition switch is turned ON.

First, in Step S**201,** information is received from various switches and sensors. In the next step S**202,** it is determined whether or not the automatic engine stop condition holds. If the determination in step S**202** is NO, the process returns to step S**201.** If the determination in Step S**202** is YES, the process proceeds to step S**203.**

In step S**203,** it is determined whether or not the blower switch **13** is ON. If the determination in step S**203** is NO, the process proceeds to step S**204** wherein the vehicle control unit **2** automatically stops the engine. Then, it is determined in the next step S**205** whether or not the automatic engine stop condition has become unsatisfied. If the determination in step S**205** is NO, the procedure in step S**205** is repeated. When the determination in step S**205** is turned YES, the process proceeds to step S**206** wherein the vehicle control unit **2** ends the automatic engine stop (i.e., restarts the engine) and then the process returns.

On the other hand, if the determination in step S**203** is YES, the process proceeds to step S**207** to determine whether or not the air conditioning priority switch **16** is ON. If the determination in step S**207** is YES, the process returns to step S**201.** If the determination in step S**207** is NO, the process proceeds to step S**208.**

In step S**208,** it is determined whether or not failure occurs in the mode switch **15,** the air-mixing damper position sensor **27** or the blow-off port opening/closing damper position sensor **28.** If the determination in step S**208** is YES, the process proceeds to step S**209** to determine whether or not the enabling flag F is 0. If the determination in step S**209** is YES, the procedure in step S**209** is repeated. When the determination in step S**209** is turned NO, the process proceeds to step S**210.**

In step S**210,** it is determined whether or not the set temperature is at a maximum or minimum value to provide heating or cooling at full capacity. If the determination in step S**210** is YES, the process returns to step S**201**. If the determination in step S**210** is NO, the process proceeds to step S**211.**

In step S**211,** it is determined whether or not failure occurs in the water temperature sensor **25.** In the determination in step S**211** is YES, the process proceeds to step S**212** to determine whether or not the enabling flag F is 0. If the determination in step S**212** is YES, the procedure in step **212** is repeated. When the determination in step S**212** is turned NO, the process proceeds to step S**214.**

On the other hand, if the determination in step S**211** is NO, the process proceeds to step S**213** to determine whether or not the engine cooling water temperature Tw is not lower than the specified temperature Tw0. If the determination in step S**213** is NO, the process returns to step S**201.** If the determination in step S**213** is YES, the process proceeds to step S**214.**

In step S**214** to which the process proceeds when the determination in step S**212** is NO or when the determination in step S**213** is YES, it is determined whether or not failure occurs in the outside air temperature sensor **22.** If the determination in step S**214** is YES, the process proceeds to step S**215** to determine whether or not the enabling flag F is 0. If the determination in step S**215** is YES, the procedure in step S**215** is repeated. When the determination in step S**215** is turned NO, the process proceeds to step S**216** to set the maximum period t5max (because of failure in the outside air temperature sensor **22,** not set the maximum period t5max according to the outside air temperature Ta as in the after-mentioned step S**224** but set it at a fixed value), and then proceeds to step S**225**.

On the other hand, if the determination in step S**214** is NO, the process proceeds to step S**217** to determine whether or not the air conditioning switch **12** is ON. If the determination in step S**217** is NO, the process proceeds to step S**218.** If the determination in step S**217** is YES, the process proceeds to step S**222.**

In step S**218,** it is determined whether or not the outside air temperature Ta is higher than Ta0 (corresponding to 20°C in Figure 3). If the determination in step S**218** is YES, the process proceeds to step S**219** wherein the vehicle control unit **2** automatically stops the engine. Then, in the next step S**220,** it is determined whether or not the automatic engine stop condition has become unsatisfied. If the determination in step S**220** is NO, the process returns to step S**218.** If the determination in step S**220** is YES, the process proceeds to step S**221** wherein the vehicle control unit **2** ends the automatic engine stop and then the process returns. On the other hand, if the determination in step S**218** is NO, the process proceeds to step S**223.**

In step S**222** to which the process proceeds when the determination in step S**217** is YES, it is determined whether or not the outside air temperature Ta is higher than Ta1 (corresponding to 37.5°C in Figure **2**). If the determination in step S**222** is YES, the process returns to step S**201.** If the determination in step S**222** is NO, the process proceeds to step S**223.**

In step S**223** to which the process proceeds when the determination in step S**218** or S**222** is NO, it is determined whether or not the outside air temperature Ta is not lower than Ta2 (corresponding to 0°C in Figures **2** and **3**). If the determination in step S**223** is NO, the process returns to step S**201.** If the determination in step S**223** is YES, the process proceeds to step S**224** to set the maximum period t5max according to the outside air temperature Ta (see Figures **2** and **3**), and then proceeds to step S**225.**

In step S**225** to which the process proceeds after step S**216** or S**224,** it is determined whether or not failure occurs in the inside air temperature sensor **21.** If the determination in step S**225** is YES, the process proceeds to step S**226** to determine whether or not the enabling flag F is 0. If the determination in step S**226** is YES, the procedure in step S**226** is repeated. When the determination in step S**226** is turned NO, the process proceeds to step S**227** to set the fixed timer t5 (because of failure in the inside air temperature sensor **21**, not set the period according to the difference between the desired and actual cabin temperatures as in the after-mentioned step S**228** but set it at a fixed value), and then proceeds to step S**229.**

On the other hand, if the determination in step S**225** is NO, the process proceeds to step S**228** to set the variable timer t5 according to the difference between the desired and actual cabin temperatures (see Figure **4**), and then proceeds to step S**229.**

In the next step S**229,** it is determined whether or not the value t5 is larger than t5max. If the determination in step S**229** is YES, the process proceeds to step S**230** to set the total timer tset at t5max in order to count the predetermined period, and then proceeds to step S**232.** If the determination in step S**229** is NO, the process proceeds to step S**231** to set the total timer tset at t5, and then proceeds to step S**232.**

In step S**232,** the engine is automatically stopped. In the next step S**233,** the timer is counted. In the next step S**234,** it is determined whether or not the count time t is larger than tset.

If the determination in step S**234** is NO, the process proceeds to step S**235** to determine whether or not the automatic engine stop condition has become unsatisfied. If the determination in step S**235** is NO, the process returns to step S**233.** If the determination in step S**235** is YES, the process proceeds to step S**236** wherein the vehicle control unit **2** ends the automatic engine stop and then the process returns.

On the other hand if the determination in step S**234** is YES, the process proceeds to step S**237** in which the vehicle control unit **2** ends the automatic engine stop, and the process determines in the next step S**238** whether or not the automatic engine stop condition has become unsatisfied. If the determination in step S**238** is NO, the procedure in step S**238** is repeated until the determination becomes YES. When the determination in step **238** becomes YES, the process returns.

When the automatic engine stop condition holds and the air conditioning system **1** is in operation and in the specified condition (i.e. a condition that the blower switch **13** is ON, the air conditioning priority switch **16** is OFF, the engine cooling water temperature Tw is not lower than the specified temperature Tw0 and the outside air temperature Ta is within the specified range), the vehicle control unit **2** and the air conditioning control unit **11** control the engine to automatically stop for a predetermined period unless the detecting device in which failure has been detected is any of the specific detecting devices.

On the other hand, when the detecting device in which failure has been detected is one of the specific detecting devices, an automatic engine stop is not performed until the passage of the first predetermined period T1 from the time when the ignition switch is turned ON, even if the automatic engine stop condition holds and the air conditioning system **1** is in operation and in the specified condition. Then, after the passage of the first predetermined period T1, the engine is automatically stopped for a predetermined period. In this case, if the temperature control switch **14** detects a change in the set temperature after the passage of the first predetermined period T1, an automatic engine stop is not performed. Furthermore, if the set temperature is not changed until the passage of the second predetermined period T2 from the time of detection of the first change in the set temperature, the engine is automatically stopped for a predetermined period. Furthermore, if the detecting device in which failure has been detected is the mode switch **15** or the blow-off port opening/closing damper position sensor **28** and the humidity H is larger than the specified value H0 after the passage of the first predetermined period T1, an automatic engine stop is not performed. If, in the same case, the humidity H is equal to or lower than the specified value H0, the engine is automatically stopped for a predetermined period.

According to the present embodiment, when failure is detected in a detecting device, an automatic engine stop of the vehicle control unit **2** is permitted or inhibited depending upon in which detecting device failure has been detected. Specifically, an automatic engine stop is permitted or inhibited depending upon if the detecting device in which failure has been detected has less or much influence on air conditioning. This increases the frequency with which an automatic engine stop occurs while suppressing deterioration in air conditioning performance.

In the third embodiment, the automatic engine stop control system is composed of the vehicle control unit **2** and the air conditioning control unit **11.** The automatic engine stop control system, however, may be composed of any one of the vehicle control unit **2,** the air conditioning control unit **11** and the engine control unit **3,** or may be composed of these units.

## Claims

1. A vehicle control system comprising:
an air conditioning system **(1);**
an automatic engine stop control system **(2)** for automatically stopping a vehicle engine;
an accessory **(6, 8)** which is driven by the vehicle engine;
a vehicle stop detecting device **(42)** for detecting a stop of the vehicle; an outside air temperature detecting device (22) for detecting the outside air temperature around the vehicle; and
an air conditioning operation detecting device **(13)** for detecting the operation of the air conditioning system,
wherein the air conditioning system comprises:
a heat exchanger for heating or cooling supply air to a cabin of the vehicle by heat exchange with heat transfer medium supplied from the accessory; and
a supply air temperature controller **(11)** for controlling the temperature of the supply air to the cabin,
wherein the vehicle control system further comprises an air conditioning capability detecting device **(7, 25)** for detecting a value relating to the capability of the heat transfer medium to heat or cool the supply air,
wherein the automatic engine stop control system controls the engine to automatically stop for a predetermined period when the vehicle is determined to be stopping based on a detection result of the vehicle stop detecting device, the air conditioning system is determined to be in operation based on a detection result of the air conditioning operation detecting device and the detected value of the air conditioning capability detecting device meets a specified condition,
**characterized in that**
the automatic engine stop control system limits the predetermined period so as not to exceed a maximum value set according to the outside air temperature detected by the outside air temperature detecting device.

2. The vehicle control system of claim 1, further comprising:
a cabin temperature detecting device **(21)** for detecting the temperature in the cabin; and
a desired cabin temperature setting section **(14),** constituting part of the air conditioning system, for setting a desired temperature in the cabin,
wherein the automatic engine stop control system sets the predetermined period at a fixed or longer period when the outside air temperature detected by the outside air temperature detecting device is within a specified range, and sets the predetermined period at a period set based on the temperature difference between the desired cabin temperature set by the desired cabin temperature setting section and the cabin temperature detected by the cabin temperature detecting device when the outside air temperature is out of the specified range.

3. The vehicle control system of claim 2, wherein when the outside air temperature detected by the outside air temperature detecting device is within the specified range, the predetermined period is a period obtained by adding to the fixed period the period set based on the temperature difference between the desired cabin temperature set by the desired cabin temperature setting section and the cabin temperature detected by the cabin temperature detecting device.

4. The vehicle control system of any one of claims 1 to 3, wherein
the accessory is a water pump **(8),**
the heat transfer medium is engine cooling water supplied from the water pump to the heat exchanger,
the air conditioning capability detecting device is configured to detect the temperature of the engine cooling water as the value relating to the capability of the heat transfer medium to heat or cool the supply air,
the specified condition is that the engine cooling water temperature detected by the air conditioning capability detecting device is equal to or higher than a specified temperature, and
the automatic engine stop control system controls the engine to automatically stop if the specified condition is satisfied.

5. The vehicle control system of any one of claims 1 to 3, wherein
the accessory is a compressor **(6),**
the heat transfer medium is refrigerant supplied from the compressor to the heat exchanger,
the air conditioning capability detecting device is configured to detect the refrigerant discharge pressure of the compressor as the value relating to the capability of the heat transfer medium to heat or cool the supply air,
the specified condition is that the refrigerant discharge pressure detected by the air conditioning capability detecting device is equal to or higher than a specified pressure,
the automatic engine stop control system controls the engine to automatically stop if the specified condition is satisfied.

6. The vehicle control system of claim 1, further comprising:
a plurality of detecting devices **(12-16, 22-26, 27-29)** for air conditioning in the air conditioning system; and
a failure detecting device **(11)** for detecting failure in the plurality of detecting devices,
wherein the automatic engine stop control system is configured, when the failure detecting device detects failure in any of the plurality of detecting devices, to permit or inhibit an automatic engine stop of the automatic engine stop control system depending on in which of the detecting devices failure has been detected.

7. The vehicle control system of claim 6, wherein the plurality of detecting devices include:
a water temperature detecting device **(25)** for detecting the temperature of the engine cooling water serving as the heat transfer medium;
an outside air temperature detecting device **(22)** for detecting the outside air temperature around the vehicle; and
a cabin temperature detecting device **(21)** for detecting the temperature in the cabin, and
wherein when the detecting device in which failure has been detected by the failure detecting device is either one of the water temperature detecting device, the outside air temperature detecting device and the cabin temperature detecting device, the automatic engine stop control system inhibits an automatic engine stop of the automatic engine stop control system until the passage of a first predetermined period from the time when an ignition switch is turned ON, and permits an automatic engine stop of the automatic engine stop control system after the passage of the first predetermined period.

8. The vehicle control system of claim 7, further comprising a set temperature detecting device **(14)** for detecting the temperature set by a passenger's setting,
wherein when the set temperature detecting device detects a change in the set temperature after the passage of the first predetermined period from the time when the ignition switch is turned ON, the automatic engine stop control system inhibits an automatic engine stop of the automatic engine stop control system.

9. The vehicle control system of claim 8, wherein when the set temperature detecting device detects no further change in the set temperature after the passage of a second predetermined period from the time when the set temperature detecting device detects the change in the set temperature, the automatic engine stop control system permits an automatic engine stop of the automatic engine stop control system.

10. The vehicle control system of claim 7, wherein when the detecting device in which failure has been detected by the failure detecting device is the water temperature detecting device and the outside air temperature detected by the outside air temperature detecting device is equal to or higher than a reference temperature, the automatic engine stop control system makes the first predetermined period shorter than that when the outside air temperature is lower than the reference temperature.

11. The vehicle control system of claim 6, further comprising:
a blow-off port selecting mechanism **(33),** constituting part of the air conditioning system, for selecting among blow-off ports for the supply air to the cabin;
a selected blow-off port mode detecting device **(15, 28)** for detecting the mode of blow-off port presently selected by the blow-off port selecting mechanism; and
a humidity detecting device **(26)** for detecting the humidity in the cabin,
wherein when the detecting device in which failure has been detected by the failure detecting device is the selected blow-off port mode detecting device, the automatic engine stop control system inhibits an automatic engine stop of the automatic engine stop control system if the humidity detected by the humidity detecting device is larger than a specified value, and permits an automatic engine stop of the automatic engine stop control system if the humidity is equal to or smaller than the specified value.

12. The vehicle control system of claim 6, wherein when the detecting device in which failure has been detected by the failure detecting device is a light intensity detecting device **(23)** for detecting the intensity of sunlight or a set temperature detecting device **(14)** for detecting the temperature set by a passenger's setting, the automatic engine stop control system permits an automatic engine stop of the automatic engine stop control system.

13. The vehicle control system of claim 1, wherein when the vehicle is determined to be stopping based on a detection result of the vehicle stop detecting device and the air conditioning system is determined to be in operation based on a detection result of the air conditioning operation detecting device, the automatic engine stop control system controls the engine to automatically stop for a first predetermined period if the detected value of the air conditioning capability detecting device meets a first specified condition and to automatically stop for a second predetermined period shorter than the first predetermined period if the detected value of the air conditioning capability detecting device meets a second specified condition that makes the capability of the heat transfer medium to heat or cool the supply air lower than when meeting the first specified condition, and
wherein the automatic engine stop control system limits the first predetermined period and the second predetermined period so as not to exceed maximum values, respectively, set according to the outside air temperature detected by the outside air temperature detecting device.

14. The vehicle control system of claim 13, further comprising:
a cabin temperature detecting device **(21)** for detecting the temperature in the cabin; and
a desired cabin temperature setting section **(14),** constituting part of the air conditioning system, for setting a desired temperature in the cabin,
wherein the automatic engine stop control system sets the first and second predetermined periods based on the temperature difference between the desired cabin temperature set by the desired cabin temperature setting section and the cabin temperature detected by the cabin temperature detecting device and increases the difference between the first and second predetermined periods with increase in the temperature difference.

15. The vehicle control system of claim 13 or 14,
wherein when the vehicle is determined to be stopping based on a detection result of the vehicle stop detecting device, the air conditioning system is determined to be in operation based on a detection result of the air conditioning operation detecting device and the detected value of the air conditioning capability detecting device meets the first specified condition, the automatic engine stop control system controls the engine to automatically stop for the first predetermined period on condition that the outside air temperature detected by the outside air temperature detecting device is within a first specified range, and
wherein when the vehicle is determined to be stopping based on a detection result of the vehicle stop detecting device, the air conditioning system is determined to be in operation based on a detection result of the air conditioning operation detecting device and the detected value of the air conditioning capability detecting device meets the second specified condition, the automatic engine stop control system controls the engine to automatically stop for the second predetermined period on condition that the outside air temperature detected by the outside air temperature detecting device is within a second specified range included in and narrower than the first specified range.

16. The vehicle control system of claim 15, wherein the automatic engine stop control system makes the maximum value of the second predetermined period shorter than the maximum value of the first predetermined period.

17. The vehicle control system of any one of claims 13 to 16, wherein
the accessory is a water pump **(8),**
the heat transfer medium is engine cooling water supplied from the water pump to the heat exchanger,
the air conditioning capability detecting device is configured to detect the temperature of the engine cooling water as the value relating to the capability of the heat transfer medium to heat or cool the supply air,
the first specified condition is that the engine cooling water temperature detected by the air conditioning capability detecting device is equal to or higher than a first specified temperature,
the second specified condition is that the engine cooling water temperature is lower than the first specified temperature and equal to or higher than a second specified temperature lower than the first specified temperature, and
the automatic engine stop control system controls the engine to automatically stop for the first predetermined period if the first specified condition is satisfied and automatically stop for the second predetermined period if the second specified condition is satisfied.

18. The vehicle control system of any one of claims 13 to 16, wherein
the accessory is a compressor **(6),**
the heat transfer medium is refrigerant supplied from the compressor to the heat exchanger,
the air conditioning capability detecting device is configured to detect the refrigerant discharge pressure of the compressor as the value relating to the capability of the heat transfer medium to heat or cool the supply air,
the first specified condition is that the refrigerant discharge pressure detected by the air conditioning capability detecting device is equal to or higher than a first specified pressure,
the second specified condition is that the refrigerant discharge pressure is lower than the first specified pressure and equal to or higher than a second specified pressure lower than the first specified pressure, and
the automatic engine stop control system controls the engine to automatically stop for the first predetermined period if the first specified condition is satisfied and automatically stop for the second predetermined period if the second specified condition is satisfied.

## Patentansprüche

1. Kraftfahrzeugsteuerungssystem umfassend:
eine Klimaanlage (1);
ein automatisches Motor-Ausschaltsteuerungssystem (2) zum automatischen Ausschalten eines Kraftfahrzeugmotors;
ein Zusatzgerät (6, 8), welches durch den Kraftfahrzeugmotor angetrieben wird;
eine Kraftfahrzeuganhalt-Erfassungsvorrichtung (42) zum Erfassen eines Anhaltens des Kraftfahrzeuges;
eine Außenlufttemperatur-Erfassungsvorrichtung (22) zum Erfassen der Außenlufttemperatur um das Kraftfahrzeug herum; und
eine Klimatisierungsbetrieb-Erfassungsvorrichtung (13) zum Erfassen des Betriebs der Klimaanlage;
wobei die Klimaanlage umfasst:
einen Wärmeaustauscher zum Erwärmen oder Kühlen von Zuluft zu einer Fahrgastzelle des Kraftfahrzeuges durch Wärmeaustausch mit einem Wärmeübertragungsmedium, das von dem Zusatzgerät zugeführt wird; und
einen Zuluft-Temperaturregler (11) zum Regeln der Temperatur der Zuluft zu der Fahrgastzelle,
wobei das Kraftfahrzeugsteuerungssystem ferner eine Klimatisierungsfähigkeit-Erfassungsvorrichtung (7, 25) zum Erfassen eines Wertes umfasst, der sich auf die Fähigkeit des Wärmeübertragungsmediums zum Erwärmen oder Kühlen der Zuluft bezieht,
wobei das automatische Motor-Ausschaltsteuerungssystem den Motor steuert, dass er automatisch während eines vorbestimmten Zeitraumes ausschaltet, wenn festgestellt wird, dass das Kraftfahrzeug aufgrund eines Erfassungsergebnisses der Kraftfahrzeuganhalt-Erfassungsvorrichtung gerade anhält, wenn aufgrund eines Erfassungsergebnisses der Klimatisierungsbetrieb-Erfassungsvorrichtung festgestellt wird, dass die Klimaanlage in Betrieb ist und der erfasste Wert der Klimatisierungsfähigkeit-Erfassungsvorrichtung eine spezifizierte Bedingung erfüllt,
**dadurch gekennzeichnet, dass**
das automatische Motor-Ausschaltsteuerungssystem den vorbestimmten Zeitraum dergestalt begrenzt, dass ein maximaler Wert nicht überschritten wird, der gemäß der Außenlufttemperatur eingestellt wird, die durch die Außenlufttemperatur-Erfassungsvorrichtung erfasst wird.

2. Kraftfahrzeugsteuerungssystem nach Anspruch 1, ferner umfassend:
eine Fahrgastzellentemperatur-Erfassungsvorrichtung (21) zum Erfassen der Temperatur in der Fahrgastzelle; und
einen Fahrgastzellenwunschtemperatur-Einstellabschnitt (14), der Bestandteil der Klimaanlage ist, zum Einstellen einer gewünschten Temperatur in der Fahrgastzelle,
wobei das automatische Motor-Ausschaltsteuerungssystem den vorbestimmten Zeitraum auf einen festen oder längeren Zeitraum einstellt, wenn die Außenlufttemperatur, die durch die Außenlufttemperatur-Erfassungsvorrichtung erfasst wird, innerhalb eines spezifizierten Bereiches liegt, und den vorbestimmten Zeitraum auf einen Zeitraum einstellt, welcher aufgrund des Temperaturunterschieds zwischen der durch den Fahrgastzellenwunschtemperatur-Einstellabschnitt eingestellten Fahrgastzellenwunschtemperatur und der durch die Fahrgastzellentemperatur-Erfassungsvorrichtung erfassten Fahrgastzellentemperatur eingestellt wird, wenn die Außenlufttemperatur außerhalb des spezifizierten Bereiches liegt.

3. Kraftfahrzeugsteuerungssystem nach Anspruch 2, wobei, wenn die Außenlufttemperatur, die durch die Außenlufttemperatur-Erfassungsvorrichtung erfasst wird, innerhalb des spezifizierten Bereiches liegt, der vorbestimmte Zeitraum ein Zeitraum ist, der erhalten wird, indem zu dem festen Zeitraum der Zeitraum addiert wird, welcher aufgrund des Temperaturunterschiedes zwischen der durch den Fahrgastzellenwunschtemperatur-Einstellabschnitt eingestellten Fahrgastzellenwunschtemperatur und der Fahrgastzellentemperatur eingestellt ist, die durch die Fahrgastzellentemperatur-Erfassungsvorrichtung erfasst wird.

4. Kraftfahrzeugsteuerungssystem nach irgendeinem der Ansprüche 1 bis 3, wobei
das Zusatzgerät eine Wasserpumpe (8) ist,
das Wärmeübertragungsmedium Motorkühlwasser ist, das dem Wärmeaustauscher von der Wasserpumpe zugeführt wird,
die Klimatisierungsfähigkeit-Erfassungsvorrichtung ausgestaltet ist, die Temperatur des Motorkühlwassers als den Wert zu erfassen, der sich auf die Fähigkeit des Wärmeübertragungsmediums zum Erwärmen oder Kühlen der Zuluft bezieht,
die spezifizierte Bedingung daraus besteht, dass die Temperatur des Motorkühlwassers, die durch die Klimatisierungsfähigkeit-Erfassungsvorrichtung erfasst wird, gleichwertig zu einer spezifizierten Temperatur oder höher als diese ist, und
das automatische Motor-Ausschaltsteuerungssystem den Motor steuert, dass er automatisch ausschaltet, wenn der spezifizierten Bedingung genügt wird.

5. Kraftfahrzeugsteuerungssystem nach irgendeinem der Ansprüche 1 bis 3, wobei
das Zusatzgerät ein Kompressor (6) ist,
das Wärmeübertragungsmedium ein Kühlmittel ist, das dem Wärmeaustauscher von dem Kompressor zugeführt wird,
die Klimatisierungsfähigkeit-Erfassungsvorrichtung ausgestaltet ist, den Kühlmittelförderdruck des Kompressors als den Wert zu erfassen, der sich auf die Fähigkeit des Wärmeübertragungsmediums zum Erwärmen oder Kühlen der Zuluft bezieht,
die spezifizierte Bedingung daraus besteht, dass der Kühlmittelförderdruck, der durch die Klimatisierungsfähigkeit-Erfassungsvorrichtung erfasst wird, gleichwertig zu einem spezifizierten Druck oder höher als dieser ist,
das automatische Motor-Ausschaltsteuerungssystem den Motor steuert, dass er automatisch ausschaltet, wenn der spezifizierten Bedingung genügt wird.

6. Kraftfahrzeugsteuerungssystem nach Anspruch 1, ferner umfassend:
eine Vielzahl von Erfassungsvorrichtungen (12 bis 16, 22 bis 26, 27 bis 29) für Klimatisierung in der Klimaanlage; und
eine Störung-Erfassungsvorrichtung (11) zum Erfassen einer Störung in der Vielzahl von Erfassungsvorrichtungen,
wobei das automatische Motor-Ausschaltsteuerungssystem ausgestaltet ist, ein automatisches Ausschalten des Motors von dem automatischen Motor-Ausschaltsteuerungssystem abhängig davon, bei welcher der Erfassungsvorrichtungen eine Störung erfasst worden ist, zu ermöglichen oder zu unterbinden, wenn die Störung-Erfassungsvorrichtung eine Störung in irgendeiner der Vielzahl von Erfassungsvorrichtungen erfasst.

7. Kraftfahrzeugsteuerungssystem nach Anspruch 6, wobei die Vielzahl von Erfassungsvorrichtungen einschließen:
eine Wassertemperatur-Erfassungsvorrichtung (25) zum Erfassen der Temperatur des Motorkühlwassers, das als Wärmeübertragungsmedium dient;
eine Außenlufttemperatur-Erfassungsvorrichtung (22) zum Erfassen der Außenlufttemperatur um das Kraftfahrzeug herum; und
eine Fahrgastzellentemperatur-Erfassungsvorrichtung (21) zum Erfassen der Temperatur in der Fahrgastzelle; und
wobei, wenn die Erfassungsvorrichtung, in welcher die Störung durch die Störung-Erfassungsvorrichtung erfasst worden ist, entweder die Wassertemperatur-Erfassungsvorrichtung, die Außenlufttemperatur-Erfassungsvorrichtung oder die Fahrgastzellentemperatur-Erfassungsvorrichtung ist, das automatische Motor-Ausschaltsteuerungssystem ein automatisches Ausschalten des Motors von dem automatischen Motor-Ausschaltsteuerungssystem bis zum Verstreichen eines ersten vorbestimmten Zeitraumes von dem Zeitpunkt an unterbindet, wenn ein Zündschalter eingeschaltet wird, und ein automatisches Ausschalten des Motors von dem automatischen Motor-Ausschaltsteuerungssystem nach dem Verstreichen des ersten vorbestimmten Zeitraumes ermöglicht.

8. Kraftfahrzeugsteuerungssystem nach Anspruch 7, ferner umfassend eine Temperatureinstellung-Erfassungsvorrichtung (14) zum Erfassen der Temperatur, die durch ein Einstellen eines Insassen eingestellt wird,
wobei, wenn die Temperatureinstellung-Erfassungsvorrichtung eine Veränderung in der Temperatureinstellung nach dem Verstreichen des ersten vorbestimmten Zeitraumes von dem Zeitpunkt an erfasst, wenn der Zündschalter eingeschaltet wird, das automatische Motor-Ausschaltsteuerungssystem ein automatisches Ausschalten des Motors von dem automatischen Motor-Ausschaltsteuerungssystem unterbindet.

9. Kraftfahrzeugsteuerungssystem nach Anspruch 8, wobei, wenn die Temperatureinstellung-Erfassungsvorrichtung keine weitere Veränderung in der Temperatureinstellung nach dem Verstreichen eines zweiten vorbestimmten Zeitraumes von dem Zeitpunkt an erfasst, wenn die Temperatureinstellung-Erfassungsvorrichtung die Veränderung in der Temperatureinstellung erfasst, das automatische Motor-Ausschaltsteuerungssystem ein automatisches Ausschalten des Motors von dem automatischen Motor-Ausschaltsteuerungssystem ermöglicht.

10. Kraftfahrzeugsteuerungssystem nach Anspruch 7, wobei, wenn die Erfassungsvorrichtung, bei welcher eine Störung durch die Störung-Erfassungsvorrichtung erfasst worden ist, die Wassertemperatur-Erfassungsvorrichtung ist und die Außenlufttemperatur, die durch die Außenlufttemperatur-Erfassungsvorrichtung erfasst wird, gleichwertig zu einer oder höher als eine Referenztemperatur ist, das automatische Motor-Ausschaltsteuerungssystem den ersten vorbestimmten Zeitraum kürzer als denjenigen macht, wenn die Außenlufttemperatur niedriger als die Referenztemperatur ist.

11. Kraftfahrzeugsteuerungssystem nach Anspruch 6, ferner umfassend:
einen Luftausströmanschluss-Auswahlmechanismus (33), der Bestandteil der Klimaanlage ist, zum Auswählen unter Luftausströmanschlüssen für die Zuluft zu der Fahrgastzelle;
eine Luftausströmanschluss-Auswahlmodus-Erfassungsvorrichtung (15, 28) zum Erfassen des Modus des Luftausströmanschlusses, der aktuell durch den Luftausströmanschluss-Auswahlmechanismus ausgewählt ist; und
eine Feuchtigkeit-Erfassungsvorrichtung (26) zum Erfassen der Feuchtigkeit in der Fahrgastzelle,
wobei, wenn die Erfassungsvorrichtung, in welcher eine Störung durch die Störung-Erfassungsvorrichtung erfasst worden ist, die Luftausströmanschluss-Auswahlmodus-Erfassungsvorrichtung ist, das automatische Motor-Ausschaltsteuerungssystem ein automatisches Ausschalten des Motors von dem automatischen Motor-Ausschaltsteuerungssystem unterbindet, wenn die Feuchtigkeit, die durch die Feuchtigkeit-Erfassungsvorrichtung erfasst wird, höher als ein spezifizierter Wert ist, und ein automatisches Ausschalten des Motors von dem automatischen Motor-Ausschaltsteuerungssystem ermöglicht, wenn die Feuchtigkeit gleichwertig zu dem spezifizierten Wert oder niedriger als dieser ist.

12. Kraftfahrzeugsteuerungssystem nach Anspruch 6, wobei, wenn die Erfassungsvorrichtung, in welcher eine Störung durch die Störung-Erfassungsvorrichtung erfasst worden ist, eine Lichtstärke-Erfassungsvorrichtung (23) zum Erfassen der Stärke von Sonnenlicht oder eine Temperatureinstellung-Erfassungsvorrichtung (14) zum Erfassen der Temperatur ist, die durch ein Einstellen eines Insassen eingestellt wird, das automatische Motor-Ausschaltsteuerungssystem ein automatisches Ausschalten des Motors von dem automatischen Motor Ausschaltsteuerungssystem ermöglicht.

13. Kraftfahrzeugsteuerungssystem nach Anspruch 1, wobei, wenn festgestellt wird, dass das Kraftfahrzeug aufgrund eines Erfassungsergebnisses der Kraftfahrzeuganhalt-Erfassungsvorrichtung gerade anhält, und festgestellt wird, dass die Klimaanlage aufgrund eines Erfassungsergebnisses der Klimatisierungsbetrieb-Erfassungsvorrichtung in Betrieb ist, das automatische Motor-Ausschaltsteuerungssystem den Motor steuert, dass er automatisch während eines ersten vorbestimmten Zeitraumes ausschaltet, wenn der Wert, der von der Klimatisierungsfähigkeit-Erfassungsvorrichtung erfasst wird, eine erste spezifizierte Bedingung erfüllt, und automatisch während eines zweiten vorbestimmten Zeitraumes ausschaltet, der kürzer als der erste vorbestimmte Zeitraum ist, wenn der Wert, der von der Klimatisierungsfähigkeit-Erfassungsvorrichtung erfasst wird, eine zweite spezifizierte Bedingung erfüllt, welche die Fähigkeit des Wärmeübertragungsmediums zum Erwärmen oder Kühlen der Zuluft geringer werden lässt, als wenn die erste spezifizierte Bedingung erfüllt ist, und
wobei das automatische Motor-Ausschaltsteuerungssystem den ersten vorbestimmten Zeitraum und den zweiten vorbestimmten Zeitraum dergestalt begrenzt, dass jeweils maximale Werte nicht überschritten werden, die gemäß der Außenlufttemperatur eingestellt werden, die durch die Außenlufttemperatur-Erfassungsvorrichtung erfasst wird.

14. Kraftfahrzeugsteuerungssystem nach Anspruch 13, ferner umfassend:
eine Fahrgastzellentemperatur-Erfassungsvorrichtung (21) zum Erfassen der Temperatur in der Fahrgastzelle; und
einen Fahrgastzellenwunschtemperatur-Einstellabschnitt (14), der Bestandteil der Klimaanlage ist, zum Einstellen einer Wunschtemperatur in der Fahrgastzelle,
wobei das automatische Motor-Ausschaltsteuerungssystem den ersten und zweiten vorbestimmten Zeitraum aufgrund des Temperaturunterschieds zwischen der durch den Fahrgastzellenwunschtemperatur-Einstellungsabschnitt eingestellten Fahrgastzellenwunschtemperatur und der durch die Fahrgastzellentemperatur-Erfassungsvorrichtung erfassten Fahrgastzellentemperatur einstellt, und den Unterschied zwischen dem ersten und zweiten vorbestimmten Zeitraum bei einem Ansteigen des Temperaturunterschiedes erhöht.

15. Kraftfahrzeugsteuerungssystem nach Anspruch 13 oder 14,
wobei, wenn festgestellt wird, dass das Kraftfahrzeug aufgrund eines Erfassungsergebnisses der Kraftfahrzeuganhalt-Erfassungsvorrichtung gerade anhält, wenn festgestellt wird, dass die Klimaanlage aufgrund eines Erfassungsergebnisses der Klimatisierungsbetrieb-Erfassungsvorrichtung in Betrieb ist und der Wert, der von der Klimatisierungsfähigkeit-Erfassungsvorrichtung erfasst wird, die erste spezifizierte Bedingung erfüllt, das automatische Motor-Ausschaltsteuerungssystem den Motor steuert, dass er automatisch während des ersten vorbestimmten Zeitraumes unter der Bedingung ausschaltet, dass die Außenlufttemperatur, die durch die Außenlufttemperatur-Erfassungsvorrichtung erfasst wird, innerhalb eines ersten spezifizierten Bereiches liegt, und
wobei, wenn festgestellt wird, dass das Kraftfahrzeug aufgrund eines Erfassungsergebnisses der Kraftfahrzeuganhalt-Erfassungsvorrichtung gerade anhält, wenn festgestellt wird, dass die Klimaanlage aufgrund eines Erfassungsergebnisses der Klimatisierungsbetrieb-Erfassungsvorrichtung in Betrieb ist und der Wert, der von der Klimatisierungsfähigkeit-Erfassungsvorrichtung erfasst wird, die zweite spezifizierte Bedingung erfüllt, das automatische Motor-Ausschaltsteuerungssystem den Motor steuert, dass er automatisch während des zweiten vorbestimmten Zeitraumes unter der Bedingung ausschaltet, dass die Außenlufttemperatur, die durch die Außenlufttemperatur-Erfassungsvorrichtung erfasst wird, innerhalb eines zweiten spezifizierten Bereiches liegt, der in dem ersten spezifizierten Bereich eingeschlossen und begrenzter als dieser ist.

16. Kraftfahrzeugsteuerungssystem nach Anspruch 15, wobei das automatische Motor-Ausschaltsteuerungssystem den maximalen Wert des zweiten vorbestimmten Zeitraumes kürzer als den maximalen Wert des ersten vorbestimmten Zeitraumes macht.

17. Kraftfahrzeugsteuerungssystem nach irgendeinem der Ansprüche 13 bis 16, wobei
das Zusatzgerät eine Wasserpumpe (8) ist,
das Wärmeübertragungsmedium Motorkühlwasser ist, das dem Wärmeaustauscher von der Wasserpumpe zugeführt wird,
die Klimatisierungsfähigkeit-Erfassungsvorrichtung ausgestaltet ist, die Temperatur des Motorkühlwassers als den Wert zu erfassen, der sich auf die Fähigkeit des Wärmeübertragungsmediums zum Erwärmen oder Kühlen der Zuluft bezieht,
die erste spezifizierte Bedingung daraus besteht, dass die Temperatur des Motorkühlwassers, die durch die Klimatisierungsfähigkeit-Erfassungsvorrichtung erfasst wird, gleichwertig zu einer ersten spezifizierten Temperatur oder höher als diese ist, und
die zweite spezifizierte Bedingung daraus besteht, dass die Temperatur des Motorkühlwassers niedriger als die erste spezifizierte Temperatur ist und gleichwertig zu einer zweiten spezifizierten Temperatur oder höher als diese ist, die niedriger als die erste spezifizierte Temperatur ist, und
das automatische Motor-Ausschaltsteuerungssystem den Motor steuert, dass er automatisch während des ersten vorbestimmten Zeitraumes ausschaltet, wenn der ersten spezifizierten Bedingung genügt wird, und automatisch während des zweiten vorbestimmten Zeitraumes ausschaltet, wenn der zweiten spezifizierten Bedingung genügt wird.

18. Kraftfahrzeugsteuerungssystem nach irgendeinem der Ansprüche 13 bis 16, wobei
das Zusatzgerät ein Kompressor (6) ist,
das Wärmeübertragungsmedium ein Kühlmittel ist, das dem Wärmeaustauscher von dem Kompressor zugeführt wird,
die Klimatisierungsfähigkeit-Erfassungsvorrichtung ausgestaltet ist, den Kühlmittelförderdruck des Kompressors als den Wert zu erfassen, der sich auf die Fähigkeit des Wärmeübertragungsmediums zum Erwärmen oder Kühlen der Zuluft bezieht,
die erste spezifizierte Bedingung daraus besteht, dass der Kühlmittelförderdruck, der durch die Klimatisierungsfähigkeits-Erfassungsvorrichtung erfasst wird, gleichwertig zu einem ersten spezifizierten Druck oder höher als dieser ist,
die zweite spezifizierte Bedingung daraus besteht, dass der Kühlmittelförderdruck niedriger als der erste spezifizierte Druck ist und gleichwertig zu einem zweiten spezifizierten Druck oder höher als dieser ist, der niedriger als der erste spezifizierte Druck ist, und
das automatische Motor-Ausschaltsteuerungssystem den Motor steuert, dass er automatisch während des ersten vorbestimmten Zeitraumes ausschaltet, wenn der ersten spezifizierten Bedingung genügt wird und automatisch während des zweiten vorbestimmten Zeitraumes ausschaltet, wenn der zweiten spezifizierten Bedingung genügt wird.

## Revendications

1. Système de contrôle de véhicule, comprenant :
un système de climatisation (1) ;
un système de contrôle d'arrêt de moteur automatique (2) pour arrêter automatiquement un moteur de véhicule,
un accessoire (6, 8) qui est entraîné par le moteur de véhicule ;
un dispositif de détection d'arrêt de véhicule (42) pour détecter un arrêt du véhicule ; un dispositif de détection de la température de l'air extérieur (22) pour détecter la température de l'air extérieur autour du véhicule ; et
un dispositif de détection du fonctionnement de la climatisation (13) pour détecter le fonctionnement du système de climatisation,
dans lequel le système de climatisation comprend :
un échangeur thermique pour chauffer ou refroidir l'air soufflé dans un habitacle d'un véhicule par échange thermique avec un fluide caloporteur fourni à partir de l'accessoire ; et
un contrôleur de la température de l'air soufflé (11) pour contrôler la température de l'air soufflé dans l'habitacle,
dans lequel le système de contrôle de véhicule comprend en outre un dispositif de détection de la capacité de la climatisation (7, 25) pour détecter une valeur liée à la capacité du fluide caloporteur à chauffer ou refroidir l'air soufflé,
dans lequel le système de contrôle d'arrêt de moteur automatique contrôle le moteur pour qu'il s'arrête automatiquement pour une période prédéterminée quand le véhicule est déterminé comme s'arrêtant en fonction d'un résultat de détection du dispositif de détection d'arrêt de véhicule, le système de climatisation est déterminé comme étant en fonctionnement en fonction d'un résultat de détection du dispositif de détection de fonctionnement de la climatisation et la valeur détectée du dispositif de détection de la capacité de la climatisation répond à une condition spécifiée,
**caractérisé en ce que**
le système de contrôle d'arrêt de moteur automatique limite la période prédéterminée de manière à ne pas dépasser une valeur maximale paramétrée selon la température de l'air extérieur détectée par le dispositif de détection de la température de l'air extérieur.

2. Système de contrôle de véhicule selon la revendication 1, comprenant en outre :
un dispositif de détection de la température de l'habitacle (21) pour détecter la température dans l'habitacle ; et
une section de paramétrage de la température de l'habitacle souhaitée (14), faisant partie du système de climatisation, pour paramétrer une température souhaitée dans l'habitacle,
dans lequel le système de contrôle d'arrêt de moteur automatique paramètre la période prédéterminée à une période fixée ou plus longue quand la température de l'air extérieur détectée par le dispositif de détection de la température de l'air extérieur est dans une gamme spécifiée, et paramètre la période prédéterminée à une période paramétrée en fonction de la différence de température entre la température de l'habitacle souhaitée paramétrée par la section de paramétrage de la température de l'habitacle souhaitée et la température de l'habitacle détectée par le dispositif de détection de la température de l'habitacle quand la température de l'air extérieur est hors de la gamme spécifiée.

3. Système de contrôle de véhicule selon la revendication 2,
dans lequel quand la température de l'air extérieur détectée par le dispositif de détection de la température de l'air extérieur est dans une gamme spécifiée, la période prédéterminée est une période obtenue en ajoutant à la période fixée la période paramétrée en fonction de la différence de température entre la température de l'habitacle souhaitée paramétrée par la section de paramétrage de la température de l'habitacle souhaitée et la température de l'habitacle détectée par le dispositif de détection de la température de l'habitacle.

4. Système de contrôle de véhicule selon l'une quelconque des revendications 1 à 3, dans lequel
l'accessoire est une pompe à eau (8),
le fluide caloporteur est de l'eau refroidissant le moteur fournie à partir de la pompe à eau à l'échangeur thermique,
le dispositif de détection de la capacité de la climatisation est configuré pour détecter la température de l'eau de refroidissement du moteur comme la valeur liée à la capacité du fluide caloporteur à chauffer ou refroidir l'air soufflé,
la condition spécifiée est que la température de l'eau de refroidissement du moteur détectée par le dispositif de détection de la capacité de la climatisation est égale ou supérieure à une température spécifiée, et
le système de contrôle d'arrêt de moteur automatique contrôle le moteur pour qu'il s'arrête automatiquement si la condition spécifiée est satisfaite.

5. Système de contrôle de véhicule selon l'une quelconque des revendications 1 à 3, dans lequel
l'accessoire est un compresseur (6),
le fluide caloporteur est du réfrigérant fourni par le compresseur à l'échangeur thermique,
le dispositif de détection de la capacité de la climatisation est configuré pour détecter la pression de refoulement du réfrigérant du compresseur comme la valeur liée à la capacité du fluide caloporteur à chauffer ou refroidir l'air soufflé,
la condition spécifiée est que la pression de refoulement du réfrigérant détectée par le dispositif de détection de la capacité de la climatisation est égale ou supérieure à une pression spécifiée,
le système de contrôle d'arrêt de moteur automatique contrôle le moteur pour qu'il s'arrête automatiquement si la condition spécifiée est satisfaite.

6. Système de contrôle de véhicule selon la revendication 1, comprenant en outre :
une pluralité de dispositifs de détection (12 - 16, 22 - 26, 27 - 29) pour la climatisation dans le système de climatisation ; et
un dispositif de détection d'échec (11) pour détecter un échec dans la pluralité de dispositifs de détection,
dans lequel le système de contrôle d'arrêt de moteur automatique est configuré, quand le dispositif de détection d'échec détecte un échec dans un quelconque de la pluralité de dispositifs de détection, pour permettre ou inhiber un arrêt de moteur automatique du système de contrôle d'arrêt de moteur automatique en fonction de
dans lequel parmi les dispositifs de détection l'échec a été détecté.

7. Système de contrôle de véhicule selon la revendication 6,
dans lequel la pluralité de dispositifs de détection comprend :
un dispositif de détection de la température de l'eau (25) pour détecter la température de l'eau de refroidissement du moteur servant comme fluide caloporteur ;
un dispositif de détection de la température de l'air extérieur (22) pour détecter la température de l'air extérieur autour du véhicule ; et
un dispositif de détection de la température de l'habitacle (21) pour détecter la température dans l'habitacle, et
dans lequel le dispositif de détection dans lequel l'échec a été détecté par le dispositif de détection d'échec est un parmi le dispositif de détection de la température de l'eau, le dispositif de détection de la température de l'air extérieur et le dispositif de détection de la température de l'habitacle, le système de contrôle d'arrêt de moteur automatique inhibe un arrêt de moteur automatique du système de contrôle d'arrêt de moteur automatique jusqu'au passage d'une première période déterminée à partir du moment où un interrupteur d'allumage est ALLUMÉ, et permet un arrêt de moteur automatique du système de contrôle d'arrêt de moteur automatique après le passage de la première période prédéterminée.

8. Système de contrôle de véhicule selon la revendication 7, comprenant en outre un dispositif de détection de température paramétrée (14) pour détecter la température paramétrée par un paramétrage de passager,
dans lequel quand le dispositif de détection de la température paramétrée détecte un changement dans la température paramétrée après le passage de la première période prédéterminée à partir du moment où un interrupteur d'allumage est ALLUMÉ, le système de contrôle d'arrêt de moteur automatique inhibe un arrêt de moteur automatique du système de contrôle d'arrêt de moteur automatique.

9. Système de contrôle de véhicule selon la revendication 8,
dans lequel quand le dispositif de détection de la température paramétrée ne détecte plus de changement supplémentaire dans la température paramétrée après le passage d'une seconde période prédéterminée à partir du moment où le dispositif de détection de la température paramétrée détecte le changement dans la température paramétrée, le système de contrôle d'arrêt de moteur automatique permet un arrêt de moteur automatique du système de contrôle d'arrêt de moteur automatique.

10. Système de contrôle de véhicule selon la revendication 7,
dans lequel quand le dispositif de détection dans lequel un échec a été détecté par le dispositif de détection d'échec est le dispositif de détection de la température de l'eau et la température de l'air extérieur détectée par le dispositif de détection de la température de l'air extérieur est égale ou supérieure à une température de référence, le système de contrôle d'arrêt de moteur automatique rend la première période prédéterminée plus courte que celle quand la température de l'air extérieur est inférieure à la température de référence.

11. Système de contrôle de véhicule selon la revendication 6, comprenant en outre :
un mécanisme de sélection de sortie d'évacuation (33), faisant partie du système de climatisation, pour sélectionner parmi des sorties d'évacuation pour l'air soufflé dans l'habitacle ;
un dispositif de détection de mode de sortie d'évacuation sélectionné (15, 28) pour détecter le mode de sortie d'évacuation actuellement sélectionné par le mécanisme de sélection de la sortie d'évacuation ; et
un dispositif de détection d'humidité (26) pour détecter l'humidité dans l'habitacle,
dans lequel quand le dispositif de détection dans lequel un échec a été détecté par le dispositif de détection d'échec est le dispositif de détection de mode de sortie d'évacuation sélectionné, le système de contrôle d'arrêt de moteur automatique inhibe un arrêt de moteur automatique du système de contrôle d'arrêt de moteur automatique si l'humidité détectée par le dispositif de détection d'humidité est supérieure à une valeur spécifiée, et permet un arrêt de moteur automatique du système de contrôle d'arrêt de moteur automatique si l'humidité est égale ou inférieure à la valeur spécifiée.

12. Système de contrôle de véhicule selon la revendication 6,
dans lequel quand le dispositif de détection dans lequel un échec a été détecté par le dispositif de détection d'échec est un dispositif de détection d'intensité lumineuse (23) pour détecter l'intensité de la lumière du soleil ou un dispositif de détection de la température paramétrée (14) pour détecter la température paramétrée par un paramétrage de passager, le système de contrôle d'arrêt de moteur automatique permet un arrêt de moteur automatique du système de contrôle d'arrêt de moteur automatique.

13. Système de contrôle de véhicule selon la revendication 1,
dans lequel quand le véhicule est déterminé comme s'arrêtant en fonction d'un résultat de détection du dispositif de détection d'arrêt de véhicule et le système de climatisation est déterminé comme étant en fonctionnement en fonction d'un résultat de détection du dispositif de détection de fonctionnement de la climatisation, le système de contrôle d'arrêt de moteur automatique contrôle le moteur pour s'arrêter automatiquement pour une première période prédéterminée si la valeur détectée du dispositif de détection de la capacité de la climatisation répond à une première condition spécifiée et pour s'arrêter automatiquement pour une seconde période prédéterminée plus courte que la première période prédéterminée si la valeur détectée du dispositif de détection de la capacité de la climatisation répond à une seconde condition spécifiée qui rend la capacité du fluide caloporteur à chauffer ou refroidir l'air soufflé inférieure à quand elle répond à la première condition spécifiée, et
dans lequel le système de contrôle d'arrêt de moteur automatique limite la première période prédéterminée et la seconde période prédéterminée de manière à ne pas dépasser des valeurs maximales, respectivement, paramétrées selon la température de l'air extérieur détectée par le dispositif de détection de la température de l'air extérieur.

14. Système de contrôle de véhicule selon la revendication 13, comprenant en outre :
un dispositif de détection de température de l'habitacle (21) pour détecter la température dans l'habitacle ; et
une section de paramétrage de la température de l'habitacle souhaitée (14), faisant partie du système de climatisation, pour paramétrer une température souhaitée dans l'habitacle,
dans lequel le système de contrôle d'arrêt de moteur automatique paramètre les première et seconde périodes prédéterminées en fonction de la différence de température entre la température de l'habitacle souhaitée paramétrée par la section de paramétrage de la température de l'habitacle souhaitée et la température de l'habitacle détectée par le dispositif de détection de la température de l'habitacle et augmente la différence entre les première et seconde périodes prédéterminées avec une augmentation de la différence de température.

15. Système de contrôle de véhicule selon la revendication 13 ou la revendication 14,
dans lequel quand le véhicule est déterminé comme s'arrêtant en fonction d'un résultat de détection du dispositif de détection d'arrêt de véhicule, le système de climatisation est déterminé comme étant en fonctionnement en fonction d'un résultat de détection du dispositif de détection de fonctionnement de la climatisation et la valeur détectée du dispositif de détection de la capacité de la climatisation répond à la première condition spécifiée, le système de contrôle d'arrêt de moteur automatique contrôle le moteur pour qu'il s'arrête automatiquement pour la première période prédéterminée à la condition que la température de l'air extérieur détectée par le dispositif de détection de la température de l'air extérieur soit dans une première gamme spécifiée, et
dans lequel quand le véhicule est déterminé comme s'arrêtant en fonction d'un résultat de détection du dispositif de détection d'arrêt de véhicule, le système de climatisation est déterminé comme étant en fonctionnement en fonction d'un résultat de détection du dispositif de détection de fonctionnement de la climatisation et la valeur détectée du dispositif de détection de la capacité de la climatisation répond à la seconde condition spécifiée, le système de contrôle d'arrêt de moteur automatique contrôle le moteur pour qu'il s'arrête automatiquement pour la seconde période prédéterminée à la condition que la température de l'air extérieur détectée par le dispositif de détection de la température de l'air extérieur soit dans une seconde gamme spécifiée comprise dans et plus petite que la première gamme spécifiée.

16. Système de contrôle de véhicule selon la revendication 15, dans lequel le système de contrôle d'arrêt de moteur automatique rend la valeur maximale de la seconde période prédéterminée plus courte que la valeur maximale de la première période prédéterminée.

17. Système de contrôle de véhicule selon l'une quelconque des revendications 13 à 16, dans lequel
l'accessoire est une pompe à eau (8),
le fluide caloporteur est de l'eau de refroidissement de moteur fournie à partir de la pompe à eau à l'échangeur thermique,
le dispositif de détection de la capacité de la climatisation est configuré pour détecter la température de l'eau de refroidissement du moteur comme la valeur liée à la capacité du fluide caloporteur à chauffer ou refroidir l'air soufflé,
la première condition spécifiée est que la température de l'eau de refroidissement du moteur détectée par le dispositif de détection de la capacité de la climatisation est égale ou supérieure à une première température spécifiée,
la seconde condition spécifiée est que la température d'eau de refroidissement du moteur est inférieure à la première température spécifiée et égale ou supérieure à une seconde température spécifiée inférieure à la première température spécifiée, et
le système de contrôle d'arrêt de moteur automatique contrôle le moteur pour qu'il s'arrête automatiquement pour la première période prédéterminée si la première condition spécifiée est satisfaite et pour qu'il s'arrête automatiquement pour la seconde période prédéterminée si la seconde condition spécifiée est satisfaite.

18. Système de contrôle de véhicule selon l'une quelconque des revendications 13 à 16, dans lequel
l'accessoire est un compresseur (6),
le fluide caloporteur est un réfrigérant fourni à partir du compresseur à l'échangeur thermique,
le dispositif de détection de la capacité de la climatisation est configuré pour détecter la pression de refoulement du réfrigérant du compresseur comme la valeur liée à la capacité du fluide caloporteur à chauffer ou refroidir l'air soufflé,
la première condition spécifiée est que la pression de refoulement du réfrigérant détectée par le dispositif de détection de la capacité de la climatisation est égale ou supérieure à une première pression spécifiée,
la seconde condition spécifiée est que la pression de refoulement du réfrigérant est inférieure à la première pression spécifiée et égale ou supérieure à une seconde pression spécifiée inférieure à la première pression spécifiée, et
le système de contrôle d'arrêt de moteur automatique contrôle le moteur pour qu'il s'arrête automatiquement pour la première période prédéterminée si la première condition spécifiée est satisfaite et pour qu'il s'arrête automatiquement pour la seconde période prédéterminée si la seconde condition spécifiée est satisfaite.
